(19) Europäisches Patentamt
European Patent Office
Office européen des brevets

(11) EP 2 579 369 A1

(12) # EUROPEAN PATENT APPLICATION
published in accordance with Art. 153(4) EPC

(43) Date of publication:
**10.04.2013 Bulletin 2013/15**

(21) Application number: **11770316.5**

(22) Date of filing: **09.05.2011**

(51) Int Cl.:
***H01M 4/62*** *(2006.01)* ***H01G 9/058*** *(0000.00)*
***H01M 4/13*** *(2010.01)* ***H01M 10/052*** *(2010.01)*
***H01M 10/0566*** *(2010.01)*

(86) International application number:
**PCT/JP2011/060656**

(87) International publication number:
**WO 2012/002037 (05.01.2012 Gazette 2012/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.11.2010 JP 2010252374**
**30.06.2010 JP 2010149718**

(71) Applicant: **Daikin Industries, Ltd.**
**Osaka 530-8323 (JP)**

(72) Inventors:
- **TAKAHASHI Kenzou**
**Settsu-shi, Osaka 566-8585 (JP)**
- **KOYAMA Mai**
**Settsu-shi, Osaka 566-8585 (JP)**
- **MIYANAGA Emi**
**Settsu-shi, Osaka 566-8585 (JP)**
- **KOH Meiten**
**Settsu-shi, Osaka 566-8585 (JP)**
- **SAKATA Hideo**
**Settsu-shi, Osaka 566-8585 (JP)**
- **ARIMA Hiroyuki**
**Settsu-shi, Osaka 566-8585 (JP)**
- **SANAGI Tomoyo**
**Settsu-shi, Osaka 566-8585 (JP)**
- **NAKAZAWA Hitomi**
**Settsu-shi, Osaka 566-8585 (JP)**
- **ISHIKAWA Takuji**
**Settsu-shi, Osaka 566-8585 (JP)**
- **TANAKA Atsuko**
**Settsu-shi, Osaka 566-8585 (JP)**
- **ICHISAKA Toshiki**
**Settsu-shi, Osaka 566-8585 (JP)**

(74) Representative: **HOFFMANN EITLE**
**Patent- und Rechtsanwälte**
**Arabellastrasse 4**
**81925 München (DE)**

(54) **BINDER COMPOSITION FOR ELECTRODE**

(57) The present invention provides a binder composition for an electrode. The binder composition includes PTFE particles as primary particles uniformly dispersed in an organic solvent at a high concentration. The present invention relates to a binder composition for an electrode, comprising an organosol composition containing PTFE particles (A), a polymer (B), and a fluorine-free organic solvent (C); and no electrode active material (J), wherein the polymer (B) is soluble in the fluorine-free organic solvent (C).

EP 2 579 369 A1

## Description

TECHNICAL FIELD

The present invention relates to a binder composition for an electrode which is useful in production of electrodes of a lithium secondary cell or an electric double layer capacitor. The present invention also relates to an electrode mixture slurry; an electrode; a lithium secondary cell; and an electric double layer capacitor which include the binder composition.

BACKGROUND ART

Electrodes of lithium secondary cells or electric double layer capacitors are produced by applying a slurry, prepared by mixing and dispersing an electrode active material and a binder in an aqueous dispersion medium, to a current collector and then drying the slurry. Particularly used materials are a lithium-containing transition metal complex oxide useful as a positive electrode active material, polytetrafluoroethylene (PTFE) as a binder, and a metal foil, typified by aluminum foil, as a current collector. PTFE has good adhesion to positive electrode active materials, but has poor adhesion to current collectors.

Patent Documents 1 to 3 each teach a technique to increase adhesion to current collectors and electrode active materials. The technique includes applying an aqueous electrode mixture slurry which contains an aqueous binder composition prepared by dispersing PTFE and a tetrafluoroethylene-hexafluoropropylene copolymer (FEP) resin as the binder in water; and heating the slurry to a temperature (specifically 280°C or 300°C) that is not lower than the melting point (240°C to 270°C) of FEP to melt the FEP, thereby increasing cohesion of PTFE resins and adhesion between PTFE and a current collector.

However, in the case of using an aqueous binder composition, the problem cannot be completely solved in which residual water reacts with the electrode active material or reduces the battery performance.

Accordingly, as seen in Patent Documents 4 to 8, binder compositions have been proposed which are prepared by dispersing PTFE particles (fine powder), obtainable by coagulation from a dispersion of emulsion-polymerized PTFE, in an organic solvent such as N-methyl-2-pyrrolidone (NMP), methyl ethyl ketone, toluene, and a mixed solvent of cyclohexanone and toluene, in the presence of a vinylidene fluoride (VdF) polymer as needed.

In Patent Document 9, an electrode mixture slurry is prepared by shear-mixing by a ball mill or the like an electrode active material and an organosol in which PTFE particles are dispersed in an aromatic hydrocarbon such as toluene, a ketone, or an ester, such that a PTFE-electrode active material slurry is produced; and mixing the slurry with an N-methyl-2-pyrrolidone solution in which an auxiliary binder component such as polyvinylidene fluoride (PVdF) is dissolved.

An organosol of PTFE particles tends to have very low stability when containing the PTFE particles at a high concentration, and therefore the highest concentration thereof is as low as 25% by mass if the stability needs to be maintained. For this reason, attempts have been made to modify PTFE so as to produce a high-concentration organosol.

In this context, Patent Documents 10 to 13 each disclose a method employing core-shell particles each having a core of fibril-forming high-molecular-weight PTFE and a shell of non-fibril-forming polymer. Also, Patent Document 14 teaches a method of modifying PTFE by copolymerization with a very small amount of an acrylic monomer having a polyfluoroalkyl group.

Still, the proportion of the modified PTFE particles in an organosol obtained in those Patent Documents is up to 30% by mass.

Meanwhile, combination use of PTFE particles and other fluororesins has also been proposed. For example, Patent Document 15 teaches a method in which unmodified PTFE and a tetrafluoroethylene (TFE)-hexafluoropropylene (HFP) copolymer (FEP) are used in combination. Patent Document 16 teaches an aqueous dispersion or organosol of a mixture of high-molecular-weight PTFE with FEP or PFA. Patent Document 17 teaches an organosol in which particles of a crystalline fluoropolymer such as high-molecular-weight PTFE and an amorphous fluororesin such as a vinylidene fluoride (VdF) polymer are mixed.

The ratio of PTFE/FEP, however, is at most 30/70 (mass ratio) in Patent Document 15, and a ratio higher than that causes agglomeration. Further, the organosol of Patent Document 16 contains only unmodified PTFE in an amount of 10% by mass or less. Although Patent Document 16 mentions a mixture containing unmodified PTFE and PFA at a mass ratio of 50/50, such a mixture is available only in an aqueous dispersion.

The organosol of Patent Document 17 is produced by a latex mixing method of mixing a latex of PTFE particles and a latex of amorphous or low-crystalline fluororesin particles, coagulating and drying the mixture, and dispersing the dried mixture in an organic solvent, or by a dry-blending method of blending dried PTFE particles and dried amorphous fluororesin particles and then dispersing the blended particles in an organic solvent. Here, the dry blending enables production of an organosol containing PTFE in an amount of more than 50% by mass of the solids, but the dry-blended PTFE particles are agglomerated or fibrillated to have large particle sizes and thus do not exist as primary particles,

which means that such an organosol lacks stability. The latex mixing method, meanwhile, enables PTFE particles to be dispersed as primary particles, but the proportion of PTFE particles still remains at 20% by mass or less as seen in the cases of the conventional methods.

Patent Document 1: JP 2000-149954 A
Patent Document 2: JP 2001-216957 A
Patent Document 3: JP 2001-266854 A
Patent Document 4: JP H10-134819 A
Patent Document 5: JP H11-003711 A
Patent Document 6: JP H11-003709 A
Patent Document 7: JP H10-074505 A
Patent Document 8: JP H10-302780 A
Patent Document 9: JP H11-329904 A
Patent Document 10: JP S62-109846 A
Patent Document 11: JP H2-158651 A
Patent Document 12: JP H4-154842 A
Patent Document 13: WO 96/12764 A1
Patent Document 14: JP S63-284201 A
Patent Document 15: JP S48-27549 B
Patent Document 16: JP H10-53682 A
Patent Document 17: JP 2008-527081 T

## SUMMARY OF THE INVENTION

## PROBLEMS TO BE SOLVED BY THE INVENTION

However, in the case of obtaining PTFE particles by coagulation from a dispersion of emulsion-polymerized PTFE as in Patent Documents 4 to 8, the obtained PTFE particles (fine powder) are agglomerated into secondary particles to have particle sizes of several micrometers to several tens of micrometers. Hence, the particles, when added to an organic solvent such as NMP, are not dispersed uniformly in the solvent, and are easily precipitated in the solvent. If the dispersion is stirred vigorously to improve the dispersion state, the PTFE particles are fibrillated, which causes troubles in the succeeding process.

In the case of producing an organosol of PTFE particles from an aqueous dispersion by the phase inversion method as in Patent Document 9, a comparatively stable organosol can be obtained. Even in this case, the problem is unavoidable in which the PTFE particles are fibrillated when the PTFE organosol is shear-mixed with an electrode active material and the like or further mixed with an auxiliary binder solution. Patent Document 9 actually states that the PTFE organosol may be fibrillated after the application without being shear-mixed. However, the PTFE organosol still needs to be sufficiently mixed with the electrode active material and the like to form a homogeneous slurry, which eventually fibrillates the PTFE particles.

In the case of preparing an organosol of PTFE particles by any of the conventional methods taught in Patent Documents 10 to 17, an amount of PTFE particles exceeding 30% by mass causes PTFE particles to agglomerate, giving an unstable organosol. Even in the case of a stable organosol containing 30% by mass or less of PTFE, the problem is unavoidable in which the PTFE particles are agglomerated or fibrillated when the PTFE organosol is shear-mixed with an electrode active material and the like to form an electrode mixture slurry, for example, or further mixed with an auxiliary binder solution.

The present invention aims to provide a binder composition for an electrode, including PTFE particles that are uniformly, stably dispersed, without being fibrillated, in an organic solvent such as N-methyl-2-pyrrolidone (NMP) even at a high concentration.

## MEANS FOR SOLVING THE PROBLEMS

That is, one aspect of the present invention is a binder composition for an electrode which comprises an organosol composition containing PTFE particles (A), a polymer (B), and a fluorine-free organic solvent (C); and no electrode active material (J), wherein the polymer (B) is soluble in the fluorine-free organic solvent (C).

Another aspect of the present invention is an electrode mixture slurry, comprising the binder composition for an electrode according to the present invention, and an electrode active material (J).

Other aspects of the present invention are an electrode obtainable by applying the electrode mixture slurry

according to the present invention to a current collector, and a lithium secondary cell and an electric double layer capacitor each comprising the electrode (s) according to the present invention as a positive electrode and/or a negative electrode, and a nonaqueous electrolyte.

EFFECT OF THE INVENTION

The present invention can provide a binder composition for an electrode in which PTFE particles capable of binding the electrode active materials are uniformly dispersed without being precipitated or fibrillated. The present invention can also provide a stable electrode mixture slurry, an electrode, a lithium secondary cell, and an electric double layer capacitor from the binder composition.

MODES FOR CARRYING OUT THE INVENTION

The binder composition for an electrode according to the present invention comprises no electrode active material (J) (prior to addition of an electrode active material) and an organosol composition containing PTFE particles (A), a polymer (B), and a fluorine-free organic solvent (C), wherein the polymer (B) is soluble in the fluorine-free organic solvent (C).

First, the components constituting the organosol composition of PTFE particles are described.

(A) PTFE particles

PTFE preferably has a standard specific gravity (SSG) of 2.130 to 2.230, and may be a fibril-forming one or a non-fibril-forming one.

Since PTFE cannot be melt-processed and is fibrillated, the molecular weight thereof cannot be determined by a common molecular weight determination method such as gel permeation chromatography (GPC). This is the reason that the standard specific gravity (SSG) has been used as a measure of the molecular weight. Standard specific gravity is defined in ASTM D4895-89, and a smaller value indicates a larger molecular weight. For example, the unmodified PTFE in Patent Document 15 has a standard specific gravity of 2.20 to 2.29.

The PTFE used in the present invention preferably has a standard specific gravity of 2.230 or lower, and more preferably 2.130 to 2.200. If the standard specific gravity exceeds 2.230, i.e., if the molecular weight is low, PTFE is less likely to be fibrillated. High-molecular-weight PTFE having a standard specific gravity of less than 2.130 still has its essential fibril-forming ability, but is difficult to be produced and is thus impractical.

The fibril-forming ability can also be evaluated based on another criterion, the melt viscosity (ASTM 1238-52T) at 380°C. PTFE is roughly regarded as "non-fibril-forming" herein if it has a melt viscosity at 380°C of $1 \times 10^7$ poise or lower, and preferably $1 \times 10^6$ poise or lower. The minimum melt viscosity thereof is usually $5 \times 10^2$ poise.

The fibril-forming ability can also be evaluated based on yet another criterion, the melt extrusion pressure. A high melt extrusion pressure indicates a high fibril-forming ability, and a low melt extrusion pressure indicates a low fibril-forming ability. In the present invention, PTEF is roughly regarded as "non-fibril-forming" if it has a cylinder extrusion pressure at a reduction ratio of 1600 of preferably 70 MPa or lower, more preferably 60 MPa or lower, and still more preferably 50 MPa or lower, considering that such PTEF is less likely to agglomerate in the course of organosol composition production. The minimum value thereof is usually 5 MPa, but is not particularly limited and can be appropriately set according to the application or the intended use.

(A1) Fibril-forming PTFE

Fibril-forming PTFE is generally a high-molecular-weight homopolymer of TFE having an SSG of 2.230 or lower and is typified by PTFE not being modified (hereinafter also referred to as "unmodified PTFE"). As above, fibril-forming PTFE is PTFE in the form of particles that have been difficult to be contained in an organosol at a high concentration.

(A2) Non-fibril-forming PTFE

Whether PTEF is a non-fibril forming one can be determined using the above criteria. Specific examples thereof include monomer-modified PTFE prepared by copolymerization with 2% by mass or less of a monomer for modification as mentioned in Patent Document 5 or the like; low-molecular-weight (high SSG) PTFE; and core-shell composite particles each having a core of fibril-forming PTFE and a shell of non-fibril-forming resin as described in documents such as Patent Documents 1 to 4.

In the organosol composition used in the present invention, PTFE particles, regardless of being fibril-forming or non-fibril-forming, are considered to exist as primary particles in an organosol. Here, the "existing as primary particles

in an organosol" does not require all the PTFE particles to be primary particles, and only requires that the PTFE particles be stable in an organosol when the amount of the PTFE particles (A) (the amount of the PTFE particles (A) relative to the total amount of the PTFE particles (A) and the polymer (B), hereinafter, the term is defined as the same) is 50% by mass or higher. Hence, this condition means that few agglomerated PTFE particles (PTFE particles having a particle size of 5 μm or larger) preferably exist though not clearly defined. In other words, the particles contained in the composition preferably have an average particle size of 1 μm or smaller in the particle size measurement by a light scattering method. Further, PTFE particles constituting 30% by mass or more, or even 50% by mass or more of the total amount of the PTFE particles are preferably primary particles.

The PTFE particles in a PTFE aqueous dispersion used preferably have an average primary particle size in the range of 50 to 500 nm, in terms of better stability and redispersibility of the organosol. The average primary particle size is more preferably 50 to 400 nm, and still more preferably 100 to 350 nm. More specifically, the average primary particle size of PTFE particles is preferably small in terms of preparing a more homogeneous electrode mixture slurry and is preferably in the range of 50 to 400 nm, more preferably 50 to 300 nm, and still more preferably 50 to 250 nm when the particles are mixed, for example, with a carbon material such as natural graphite, artificial graphite, and activated carbon; a conductive carbon material such as acetylene black and ketjen black; or a positive electrode material such as a lithium-containing transition metal complex oxide and a lithium-containing phosphate which are used for lithium secondary cells, lithium ion capacitors and the like.

The organosol can be produced using a PTFE aqueous dispersion whether or not the dispersion contains a dispersion stabilizer. Also, the following commercially available PTFE aqueous dispersions can be used, for example: DYNEON (registered trademark) TF 5032 PTFE, DYNEON (registered trademark) TF 5033 PTFE, DYNEON (registered trademark) TF 5035 PTFE, and DYNEON (registered trademark) TF 5050 PTFE produced by Dyneon, LLC; TEFLON (registered trademark) PTFE GRADE 30 and TEFLON (registered trademark) PTFE GRADE 307A produced by E. I. du Pont de Nemours & Co.; and Polyflon (registered trademark) D-1E and Polyflon (registered trademark) D-210C produced by Daikin Industries, Ltd.

The organosol composition used in the present invention can contain fibril-forming PTFE particles at a high concentration in a stable state although it used to be difficult for an organosol to contain such PTFE particles at a high concentration.

The organosol composition used in the present invention is preferably free from a tetrafluoroethylene (TFE)-hexafluoropropylene (HFP) copolymer (FEP).

(B) Polymer

The polymer (B) is not particularly limited as long as it dissolves in a fluorine-free organic solvent (C) which is one of the components constituting the organosol composition. The polymer (B) may be a fluororesin or fluororubber (B1), or may be a fluorine-free resin or fluorine-free rubber (B2). The polymer (B) can be appropriately selected depending on the kind of the fluorine-free organic solvent (C), and the application and the production conditions of the organosol composition.

Examples of the fluororesin or fluororubber (B1) include VdF polymers, fluorine-containing acrylic polymers, and fluorine-containing methacrylic polymers. Here, perfluoro polymers including PTFE, a tetrafluoroethylene-hexafluoropropylene copolymer (FEP), and the like do not substantially dissolve in a fluorine-free organic solvent (C), and therefore are not included in the polymer (B).

The polymer (B) is preferably a resin, more preferably a fluororesin, and still more preferably a VdF polymer. The VdF polymer may be, for example, a VdF homopolymer (PVdF) or a VdF copolymer. For example, the VdF polymer is preferably PVdF or a copolymer having a VdF polymerized unit and a polymerized unit of a monomer copolymerizable with VdF. The monomer copolymerizable with VdF is, for example, preferably at least one selected from the group consisting of TFE, HFP, perfluoro (alkyl vinyl ether) (PAVE), CTFE, $CF_2$=CFH, and $CH_2$=CFRf (Rf is a C1 to C10 perfluoroalkyl group).

The polymer (B) is preferably a VdF copolymer. The VdF copolymer is preferably a copolymer having 40 mol% or higher of a VdF polymerized unit based on the total polymerized units because such a copolymer is easily dissolved in a fluorine-free organic solvent. Particularly, a copolymer represented by the following formula is preferable as a polymer used in an electrode mixture in terms of good oxidation resistance and adhesion to a current collector:

$$-(CH_2CF_2)_x-(CF_2CF(CF_3))_y-(CF_2CF_2)_z-$$

(wherein x is 40 to 85, y is 0 to 10, and z is 1 to 60, provided that x + y + z = 100) . More preferably, the VdF copolymer is, for example, at least one selected from the group consisting of a VdF/TFE copolymer (VT) and a TFE/HFP/VdF copolymer (THV).

Examples of the fluorine-containing acrylic or methacrylic polymers include an acrylic or methacrylic polymer

having a C4 to C8 perfluoroalkyl group such as a copolymer of $CH_2$=$CHCOO(CH_2)_n$-Rf (n is an integer of 1 to 4, and Rf is a C4 to C6 perfluoroalkyl group) and a fluorine-free monomer copolymerizable therewith, and a copolymer of $CH_2$=C $(CH_3)COO(CH_2)_n$-Rf (n is an integer of 1 to 4, and Rf is a C4 to C6 perfluoroalkyl group) and a fluorine-free monomer copolymerizable therewith. Copolymerizing with a fluorine-free monomer is preferable because it enables easy dissolution in a fluorine-free organic solvent and good adhesion of a coating layer to be produced to a substrate. Examples of the copolymerizable fluorine-free monomer include α,β-ethylenic unsaturated carboxylic acid esters such as methyl acrylate, methyl methacrylate, ethyl acrylate, ethyl methacrylate, n-propyl acrylate, n-propyl methacrylate, isopropyl acrylate, isopropyl methacrylate, lauryl acrylate, stearyl acrylate, and benzyl acrylate; hydroxyalkyl esters of α,β-ethylenic unsaturated carboxylic acids such as 2-hydroxyethyl acrylate, 2-hydroxyethyl methacrylate, and 3-hydroxypropyl methacrylate; alkoxyalkyl esters of α,β-ethylenic unsaturated carboxylic acids such as diethylene glycol methacrylate; α,β-ethylenic unsaturated carboxylic acid amides such as acrylamide and methylol methacrylamide; α,β-ethylenic unsaturated carboxylic acids such as acrylic acid, methacrylic acid, itaconic acid, maleic anhydride, maleic acid, fumaric acid, and crotonic acid; styrene, alkyl styrenes, acrylonitrile, vinylpyrrolidone, alkyl vinyl ethers, and pyrrole.

The fluorine-free resin or fluorine-free rubber (B2) is not particularly limited, and can be appropriately selected according to the kind of the fluorine-free organic solvent (C), and the application and the production conditions of the organosol composition. Preferable examples of the fluorine-free resin include polyamideimide, polyimide, carboxymethyl cellulose or salts thereof, carboxyethyl cellulose or salts thereof, carboxybutyl cellulose or salts thereof, epoxy resin, urethane resin, polyethylene oxide or derivatives thereof, polymethacrylic acid or derivatives thereof, and polyacrylic acid or derivatives thereof. In the case that the fluorine-free resin has a possibility of remaining in the coating layer after the drying and heating processes after the applying process, polyamideimide and polyimide, which are resins excellent in heat resistance, are preferable as the polymer used in an electrode mixture. In contrast, in the case that the fluorine-free resin can be completely removed from the coating layer in the drying and heating processes after the applying process, resins which can be easily decomposed are preferable, and preferable examples thereof include carboxymethyl cellulose or salts thereof, carboxyethyl cellulose or salts thereof, carboxybutyl cellulose or salts thereof, urethane resin, polyethylene oxide or derivatives thereof, polymethacrylic acid or derivatives thereof, and polyacrylic acid or derivatives thereof.

Examples of the fluorine-free rubber include EPDM rubber, styrene-butadiene rubber, neoprene rubber, and acrylic rubber. In the case that the fluorine-free rubber has a possibility of remaining in the coating layer, acrylic rubber is preferable as the polymer used in an electrode mixture. In the case that the fluorine-free rubber can be removed, styrene butadiene rubber is preferable.

(C) Fluorine-free organic solvent

The fluorine-free organic solvent (C) contained in the organosol composition used in the present invention is not particularly limited as long as it can dissolve the polymer (B). The fluorine-free organic solvent (C) is appropriately determined according to the kind of the polymer (B), and the application and the production conditions of the organosol composition. The fluorine-free organic solvent (C) is preferably at least one selected from the group consisting of ether solvents, ketone solvents, alcohol solvents, amide solvents, ester solvents, aliphatic hydrocarbon solvents, aromatic hydrocarbon solvents, and halogenated hydrocarbon solvents. Further, in terms of good solubility of the polymer (B), the fluorine-free organic solvent (C) is more preferably at least one selected from the group consisting of ketone solvents, alcohol solvents, amide solvents, ester solvents, and aliphatic hydrocarbon solvents.

Examples of the ketone solvents include methyl ethyl ketone, methyl propyl ketone, methyl isopropyl ketone, methyl butyl ketone, methyl isobutyl ketone, and diisobutyl ketone. Examples of the alcohol solvents include methanol, ethanol, propanol, isopropanol, n-butanol, s-butanol, and t-butanol. Examples of the amide solvents include N-methyl-2-pyrrolidone (NMP), dimethylacetamide (DMAC), and dimethylformamide (DMF). Examples of the ester solvents include ethyl acetate, isopropyl acetate, butyl acetate, and isobutyl acetate. Examples of the aliphatic hydrocarbon solvents include hexane and petroleum ether. Examples of the aromatic hydrocarbon solvents include benzene, toluene, and xylene. Examples of the halogenated hydrocarbon solvents include carbon tetrachloride and trichloroethylene. An organic solvent hardly dissolving the polymer (B) when used alone, such as carbon tetrachloride, trichloroethylene, and diisobutyl ketone, can be mixed with a small amount of oil-soluble surfactant to prepare an organosol. These solvents may be appropriately selected according to the application field or the intended use of the organosol composition used in the present invention. The fluorine-free organic solvent is preferably an amide solvent, and more preferably N-methyl-2-pyrrolidone or dimethylacetamide. In the case of using the organosol composition in production of electrodes of batteries, N-methyl-2-pyrrolidone is particularly preferable.

The amount of the PTFE particles (A) based on the solids content of the organosol composition used in the present invention is preferably 10% by mass or more, more preferably 20% by mass or more, still more preferably 30% by mass or more, and particularly preferably 40% by mass or more. More particularly, the amount of the PTFE particles (A) based on the solids content is preferably 50% by mass or more. The organosol composition used in the present

invention contains PTFE particles stably dispersed therein but hardly contains agglomerated PTFE particles (PTFE particles having a particle size of 5 μm or larger) even in the case that the amount of the PTFE particles (A) based on the solids content is 50% by mass or more. Up to now, such an organosol containing PTFE particles has not been known. The amount of the PTFE particles is preferably 60% by mass or more, and more preferably 80% by mass or more. Also, the amount is preferably 95% by mass or less, and more preferably 80% by mass or less in terms of prevention of the PTFE particles from agglomerating due to PTFE fibrillation by shear force of stirring in production of the organosol.

The concentration of the solids content (the PTFE particles (A) and the polymer (B) in total) in the organosol composition used in the present invention may be appropriately determined according to the application and production conditions of the organosol composition. Usually, the concentration is preferably selected from the range of 1 to 40% by mass, and more preferably of 5 to 20% by mass.

The organosol composition used in the present invention is preferably substantially anhydrous in the case that the composition is applied to the field or the intended use in which presence of water is unfavorable, such as, particularly, the case of producing electrodes of lithium cells or capacitors. Specifically, the water content (Karl Fischer method) is preferably 500 ppm or lower, more preferably 350 ppm or lower, and particularly preferably 100 ppm or lower.

Next, particularly preferable combinations of the components of the organosol composition used in the present invention are listed which, however, are not intended to limit the scope of the present invention.

Example 1

(A) PTFE particles

SSG: 2.130 to 2.200
Modification: None
Fibril-forming ability: None

(B) Resin

Kind: A VdF polymer, particularly at least one kind of polymer selected from the group consisting of PVdF, VT, and THV, more preferably, at least one kind of polymer selected from the group consisting of VT and THV.

(C) Fluorine-free organic solvent

Kind: An amide solvent, particularly at least one kind selected from the group consisting of NMP and DMAC.
Solids concentration: 5 to 20% by mass
Water content: 100 ppm or lower

The organosol composition of PTFE particles can be produced by, for example, a method including the steps of:

(I) mixing an aqueous dispersion of the PTFE particles (A) and an aqueous dispersion of the polymer (B) that is soluble in the fluorine-free organic solvent (C);
(II) adding a water-soluble organic solvent (D) for coagulation to the obtained mixed aqueous dispersion to coagulate the PTFE particles (A) and the polymer (B);
(III) separating the obtained coagulum (E) of the PTFE particles (A) and the polymer (B) from the liquid layer;
(IV) mixing and stirring the obtained hydrous coagulum (E) and the fluorine-free organic solvent (C) to disperse the hydrous coagulum (E), thereby obtaining a hydrous organic dispersion (F); and
(V) removing water from the obtained hydrous organic dispersion (F).

Hereinafter, each of the steps is described.

(I) Mixing step

The aqueous dispersion of the PTFE particles (A) is preferably an aqueous dispersion of the PTFE primary

particles (particle size: 50 to 500 nm) obtained by emulsion polymerization, and the solids concentration thereof is preferably in the range of 10 to 40% by mass. The aqueous dispersion of the polymer (B) is preferably one containing particles having a particle size of about 50 to 500 nm, and preferably has a solids concentration in the range of 10 to 40% by mass.

Those two aqueous dispersions may be mixed by an ordinary mixing method as long as the mixture is not stirred as vigorously as the PTFE particles (A) are fibrillated.

(II) Coagulation step

The water-soluble organic solvent (D) for coagulation used in the coagulation step (II) may or may not be the same as the fluorine-free organic solvent (C). Examples of the organic solvent (D) for coagulation include ketone solvents and alcohol solvents which preferably have a comparatively low boiling point. Examples of the ketone solvents include acetone, methyl ethyl ketone, methyl propyl ketone, methyl isopropyl ketone, methyl butyl ketone, methyl isobutyl ketone, and diisobutyl ketone. Examples of the alcohol solvents include methanol, ethanol, propanol, isopropanol, n-butanol, s-butanol, and t-butanol.

Even in the case that the organic solvent (D) for coagulation is a fluorine-free one usable as the fluorine-free organic solvent (C), the particular organic solvents respectively used in the coagulation step (II) and the dispersion step (IV) may be different from each other.

The organic solvent (D) for coagulation is preferably at least one selected from the group consisting of ketone solvents and alcohol solvents. Particularly, at least one selected from the group consisting of acetone, methyl ethyl ketone, methyl propyl ketone, methyl isopropyl ketone, methyl butyl ketone, methyl isobutyl ketone, methanol, ethanol, propanol, isopropanol, and n-butanol is particularly preferable because they have a comparatively low boiling point and can be easily removed by distillation or the like.

The level of addition of the organic solvent (D) for coagulation is not particularly limited as long as it is enough to coagulate substantially the whole amount of the PTFE particles (A) and the polymer (B). For example, about 10 to 1000 parts by mass of the organic solvent (D) would be enough for each 100 parts by mass of the aqueous dispersion mixture of the PTFE particles (A) and the polymer (B).

In the coagulation step (II), a hydrocarbon solvent (G) is preferably added so as to facilitate the subsequent separation step (III). Examples of the hydrocarbon solvent (G) include hydrocarbon solvents having a comparatively low boiling point, such as benzene, toluene, pentane, hexane, and heptane. The level of addition may be about 1 to 100 parts by mass for each 100 parts by mass of the aqueous dispersion mixture of the PTFE particles (A) and the polymer (B).

(III) Separation step

In the separation step, the coagulum (E) and the liquid components (e.g., the organic solvent (D) for coagulation, the hydrocarbon solvent, water) are simply separated such that the solids (coagulum (E)) are recovered. The separated, recovered coagulum still contains water and thus exists as a hydrous coagulum (E).

The separation method is not particularly limited, and may be an ordinary method such as a filtration method or a supernatant removal method because highly accurate separation is not required as described above. Particularly, a filtration method is preferable in terms of the simplicity.

(IV) Dispersion step

In this step, the obtained hydrous coagulum (E) is dispersed in the fluorine-free organic solvent (C) which is one of the components constituting the organosol composition used in the present invention, and thereby a hydrous organic dispersion (F) is obtained. The dispersion method may be an ordinary dispersing and mixing method as long as the mixture is not stirred as vigorously as the PTFE particles (A) are fibrillated. Examples of the preferable dispersing and mixing method include a mechanical stirring method and an ultrasonic stirring method.

In the present invention, drying (dry-removing liquids including water) is not particularly required between the separation step (III) and the dispersion step (IV). Patent Document 8, in contrast, teaches a method of drying the recovered coagulum and then dispersing the dried coagulum in an organic solvent. In this method, the PTFE primary particles are fibrillated or agglomerated into secondary particles, which does not give a stable organosol composition containing PTFE at a high concentration.

(V) Water removal step

The water removal step (V) is a step of removing water from the hydrous organic dispersion (F). This step is preferably performed in the case that the organosol is to be used in the filed in which presence of water is unfavorable,

such as the field of battery. In this step, water is removed by a widely known method until the water content reaches a value suitable to the application or the intended use. Specific examples thereof include a method of adding an organic solvent (H) that can form an azeotrope with water such that water can be removed with the organic solvent (H) by heating; a method of using an organic solvent (C) having a higher boiling point than water as a dispersing solvent such that water can be removed by distilling or condensing the dispersion; and a method of dispersing a solid, which can absorb water and can be filtered off, and then filtering off the solid such that water can be removed. A particularly preferable method is the method of using an organic solvent (C) having a higher boiling point than water as a dispersing solvent such that water can be removed by distilling or condensing the dispersion.

The method of adding an organic solvent (H) that can form an azeotrope with water and then heating the mixture is also preferable as the water removal method. Examples of the organic solvent (H) include aromatic hydrocarbon solvents such as benzene, toluene, xylene, mesitylene, ethylbenzene, propylbenzene, and cumene; ketone solvents such as methyl ethyl ketone, methyl propyl ketone, methyl isopropyl ketone, methyl butyl ketone, and methyl isobutyl ketone; ester solvents such as ethyl acetate, isopropyl acetate, butyl acetate, and isobutyl acetate; and ether solvents such as 1,4-dioxane. The level of addition is not particularly limited, and may be about 1 to 50 parts by mass for each 100 parts by mass of the solution obtained in the dispersion step (V). The heating temperature may be appropriately determined according to the azeotropic point of the organic solvent (H) and water.

The water removal is preferably performed until the dispersion becomes substantially free from water in the case that the organosol is to be applied to the field or the intended use in which presence of water is unfavorable, such as, particularly, the case of producing electrodes for lithium cells or capacitors. Specifically, the water content (Karl Fischer method) becomes preferably 500 ppm or lower, more preferably 350 ppm or lower, and still more preferably 100 ppm or lower.

Alternatively, the method of producing the organosol composition used in the present invention may be a method including, for example, mixing an aqueous dispersion of the PTFE particles (A) and an aqueous dispersion of the polymer (B) that is soluble in the fluorine-free organic solvent (C); adding to the mixture the fluorine-free organic solvent (C) and the organic solvent (H) that can form an azeotrope with water; heat-distilling the mixture to remove water and the organic solvent (H); and adjusting the resin solids concentration.

In the present invention, the binder composition may further contain a binder polymer (I) for a current collector which has an excellent binding ability to the current collector and can be soluble in the fluorine-free organic solvent (C).

The binder polymer (I) is used to bind the electrode mixture, bound by PTFE, to the current collector. The binder polymer for a current collector may or may not be the same as the polymer (B).

The binder polymer (I) for a current collector is not particularly limited as long as it is one of fluororesins, fluorarubbers, fluorine-free resins and fluorine-free rubbers, has an excellent binding ability to the current collector, and can be soluble in the fluorine-free organic solvent (C). Fluororesins are preferable.

The fluororesin is preferably a resin having vinylidene fluoride (VdF) units. Specifically, at least one selected from the group consisting of polyvinylidene fluoride (PVdF), VdF-tetrafluoroethylene (TFE) copolymer resin, VdF-hexafluoropropylene (HFP) copolymer resin, and VdF-TFE-HFP copolymer resin is preferable in terms of good oxidation resistance and good adhesion to the current collector. Among the fluororesins, PVdF is preferable.

The fluorarubber is preferably a rubber having VdF units. Specifically, at least one selected from the group consisting of VdF-TFE copolymer rubber, VdF-HFP copolymer rubber, and TFE-VdF-HFP copolymer rubber is preferable in terms of good oxidation resistance and good adhesion to the current collector.

Examples of the fluorine-free resin include polyamideimide, polyimide, carboxymethyl cellulose or salts thereof, carboxyethyl cellulose or salts thereof, carboxybutyl cellulose or salts thereof, epoxy resin, urethane resin, polyethylene oxide or derivatives thereof, polymethacrylic acid or derivatives thereof, and polyacrylic acid or derivatives thereof.

In the case that the fluorine-free resin has a possibility of remaining in the electrode after the drying and heating processes after the electrode coating, polyamideimide and polyimide, which are resins excellent in oxidation resistance, are preferable. In contrast, in the case that the fluorine-free resin can be completely removed from the electrode in the drying and heating processes after the electrode coating, resins which can be easily decomposed are preferable, and preferable examples thereof include carboxymethyl cellulose or salts thereof, carboxyethyl cellulose or salts thereof, carboxybutyl cellulose or salts thereof, urethane resin, polyethylene oxide or derivatives thereof, polymethacrylic acid or derivatives thereof, and polyacrylic acid or derivatives thereof.

Examples of the fluorine-free rubber include EPDM rubber, styrene-butadiene rubber, neoprene rubber, and acrylic rubber. In the case that the fluorine-free rubber has a possibility of remaining in the electrode, acrylic rubber is preferable. In the case that the fluorine-free rubber can be removed, styrene butadiene rubber is preferable.

The binder polymer (I) for a current collector is dissolved in the fluorine-free organic solvent (C) in the binder composition of the present invention.

In the case of using the binder polymer (I) together, the binder composition for an electrode according to the present invention can be obtained by mixing the organosol composition of PTFE particles with a binder polymer solution for a current collector prepared by dissolving the binder polymer (I) for a current collector in the fluorine-free organic

solvent (C). In this respect, the binder composition for an electrode according to the present invention can be regarded as a composition in which the PTFE particles (A) are dispersed in the fluorine-free organic solvent (C) in which the polymer (B) and the binder polymer (I) for a current collector are dissolved.

The fluorine-free organic solvent (C) solution of the binder polymer (I) for a current collector can be easily prepared by dissolving the binder polymer (I) in the fluorine-free organic solvent (C) to a concentration of about 40 to 0.1% by mass. The dissolution may be performed by stirring or heating.

The method of mixing the fluorine-free organic solvent (C) solution of the binder polymer (I) for a current collector with the organosol composition of PTFE particles is not particularly limited. That is, the organosol composition of PTFE particles may be mixed in small portions into the fluorine-free organic solvent (C) solution, or the fluorine-free organic solvent (C) solution may be mixed in small portions into the organosol composition of PTFE particles. The mixing may be performed by stirring, but with a shear force that does not fibrillate the PTFE particles (A).

In the binder composition for an electrode according to the present invention, in the case that the binder polymer (I) for a current collector has a possibility of remaining in the electrode, the amount of the binder polymer (I) relative to the total solids content (100 parts by mass) of the PTFE particles (A) and the polymer (B) is preferably 900 parts by mass or less, more preferably 400 parts by mass or less, still more preferably 250 parts by mass or less, and particularly preferably 90 parts by mass or less. The minimum amount may be 0 parts by mass, and is preferably 1 part by mass. The amount thereof is more preferably 80 to 10 parts by mass, and particularly preferably 70 to 20 parts by mass in terms of good adhesion. Also, the amount may be more than 50 parts by mass.

The binder composition for an electrode according to the present invention may be regarded as a binder organosol composition for an electrode which includes the polytetrafluoroethylene particles (A), the polymer (B), and the fluorine-free organic solvent (C), and no electrode active material (J), wherein the polymer (B) is soluble in the fluorine-free organic solvent (C).

Here, the binder composition of the present invention does not contain a tetrafluoroethylene (TFE)-hexafluoropropylene (HFP) copolymer (FEP) as any component thereof.

Another aspect of the present invention is an electrode mixture slurry which contains the binder composition for an electrode according to the present invention and an electrode active material (J).

the electrode mixture slurry according to the present invention can be used for both positive and negative electrodes. Thus the electrode active material (J) may be either a positive electrode active material (j1) or a negative electrode active material (j2). Hereinafter, the case of electrodes for a lithium secondary cell will be described. The present invention, however, can be applied to electrodes of electric double layer capacitors, electrodes of other lithium ion capacitors, and the like, in addition to the electrodes for lithium secondary cells.

(j1) Positive electrode active material

The positive electrode active material is preferably at least one selected from the group consisting of a lithium-containing transition metal complex oxide (j1-1) and a lithium-containing phosphate (j1-2).

(j1-1) Lithium-containing transition metal complex oxide

The positive electrode active material (j1) is a lithium-containing complex metal oxide represented by formula (J1):

$Li_xM^1yM^2_{1-y}O_2$ (J1)

(wherein $0.4 \le x \le 1$; $0.3 \le y \le 1$; $M^1$ is at least one selected from the group consisting of Ni and Mn; and $M^2$ is at least one selected from the group consisting of Co, Al, and Fe).

Specifically, the positive electrode active material (j1) is preferably a lithium-containing complex metal oxide represented by any of the following formulas.

Formula (JP-1): $LiNi_xCo_yAl_zO_2$

(wherein $0.7 \le x \le 1$; $0 \le y \le 0.3$; $0 \le z \le 0.03$; $0.9 \le x + y + z \le 1.1$),

Formula (J1-2): $LiNi_xCo_yMn_zO_2$

(wherein $0.3 \le x \le 0.6$; $0 \le y \le 0.4$; $0.3 \le z \le 0.6$; $0.9 \le x + y + z \le 1.1$),

Formula (J1-3): $Li_xMn_zO_2$

(wherein $0.4 \le x \le 0.6$; $0.9 \le z \le 1$), and

Formula (J1-4): $LiFe_xCo_yMn_zO_2$

(wherein $0.3 \le x \le 0.6$; $0.1 \le y \le 0.4$; $0.3 \le z \le 0.6$; $0.9 \le x + y + z \le 1.1$).

Specific examples of the lithium-containing complex metal oxide represented by formula (J1-1) include $LiNi_{0.8}Co_{0.2}O_2$, $LiNi_{0.7}Co_{0.3}O_2$, $LiNi_{0.82}Co_{0.15}Al_{0.03}O_2$, $LiNi_{0.7}Co_{0.2}Al_{0.1}O_2$, and $LiNi_{0.85}Co_{0.1}Al_{0.5}O_2$. Among these, $LiNi_{0.82}Co_{0.15}Al_{0.03}O_2$ (NCA) is preferable.

Specific examples of the lithium-containing complex metal oxide represented by formula (J1-2) include $LiNi_{0.5}Mn_{0.5}O_2$, $LiNi_{0.75}Mn_{0.25}O2$, $LiNi_{0.25}Mn_{0.75}O_2$, $LiNi_{1/3}Co_{1/3}Mn_{1/3}O_2$, $LiNi_{0.4}Co_{0.2}Mn_{0.4}O_2$, and $LiNi_{0.3}Co_{0.5}Mn_{0.2}O_2$. Among these, $LiNi_{1/3}Co_{1/3}Mn_{1/3}O_2$ (NCM) is preferable.

Specific examples of the lithium-containing complex metal oxide represented by formula (J1-3) include $Li_{0.5}MnO_2$ (manganese spinel) and $LiMnO_2$.

Specific examples of the lithium-containing complex metal oxide represented by formula (J1-4) include $LiFe_{1/3}Co_{1/3}Mn_{1/3}O_2$, $Li_{0.5}Fe_{1/3}Co_{1/3}Mn_{1/3}O_2$, $LiFe_{0.4}Co_{0.3}Mn_{0.3}O_2$, and $Li_{0.5}Fe_{0.4}Co_{0.3}Mn_{0.3}O_2$.

In addition to these compounds, $LiCoO_2$, $LiNiO_2$, $LiMn_2O_4$ and the like can also be used.

Specifically, $LiCoO_2$, $LiMnO_2$, $LiNiO_2$, $LiMn_2O_4$, $LiNi_{0.8}Co_{0.15}Al_{0.05}O_2$, and $LiNi_{1/3}Co_{1/3}Mn_{1/3}O_2$ are preferable in that a lithium secondary cell having a high energy density and high output power can be produced.

(jl-2) Lithium-containing phosphate

Examples of the lithium-containing phosphate include ones represented by the formula:

$LiMPO_4$

(wherein M is Fe and/or Mn). Specifically, $LiFePO_4$ is preferable in that it can contribute to production of highly-safe, large-sized lithium secondary cells.

The level of addition of the positive electrode active material (j1) is preferably 50 to 99% by mass, more preferably 80 to 99% by mass of the total amount of the positive electrode mixture slurry, in terms of larger battery capacity.

(j2) Negative electrode active material

Examples of the negative electrode active material (j2) used for the negative electrode in the present invention include carbon materials, as well as metal oxides and metal nitrides into which lithium ions can be intercalated. Examples of the carbon material include natural graphite, artificial graphite, pyrocarbons, cokes, mesocarbon microbeads, carbon fiber, activated carbon, and pitch-coated graphite. Examples of the metal oxide into which lithium ions can be intercalated include metal (e.g., tin, silicon, titanium) compounds such as tin oxide, silicon oxide, and lithium titanate. Examples of the metal nitride include $Li_{2.6}Co_{0.4}N$.

The level of addition of the negative electrode active material (j2) is preferably 50 to 99% by mass, and more preferably 80 to 99% by mass of the total amount of the negative electrode mixture slurry, in terms of larger battery capacity.

The electrode mixture slurry may contain additive (s) used for production of electrodes of lithium secondary cells according to need. Examples of such an additive for a positive electrode include conductive materials, thickeners, and surfactants. Examples of such an additive for a negative electrode include, similarly to the positive electrode, conductive materials, thickeners, and surfactants.

Examples of the conductive material include conductive carbon blacks such as acetylene black and ketjen black; and carbonaceous materials such as graphite and carbon fiber.

Examples of the thickener include carboxymethyl cellulose (CMC) and acrylate resins.

The acrylate resins are expected to increase adhesion to a current collector as well as to provide a thickening effect. The acrylate resin preferably has a high oxidation potential, and for example, is preferably at least one selected from the group consisting of polyacrylic acid, ammonium polyacrylate, sodium polyacrylate, ammonium salts of acrylate copolymers, and sodium salts of acrylate copolymers. The oxidation potential of these resins is 4.3 V or higher relative to lithium. Commercially available products of polyacrylic acid, ammonium salts of acrylate copolymers, and sodium salts of acrylate copolymers include A-10H, A-93, A-7100, A-30, and A-7185 produced by Toagosel Co., Ltd. It is to be noted that the term "acrylate-" encompasses methacrylic acid as well as acrylic acid.

The level of addition of acrylate resin is preferably 0.2 to 20% by mass, and more preferably 0.5 to 10% by mass of the total amount of the electrode mixture slurry. A low level of addition of the acrylate resin tends to decrease adhesion to an electrode current collector. In contrast, a high level of addition thereof tends to increase the viscosity of

the slurry to bring difficulties in application of the slurry and, in this case, the resin tends to cover the active material surface to increase the resistance, and thereby the cell capacity is likely to decrease.

Appropriately mixing the aforementioned components followed by stirring or the like enables to prepare a uniformly mixed product of an electrode mixture slurry.

Yet another aspect of the present invention is an electrode (positive or negative electrode) produced by applying the electrode mixture slurry according to the present invention to a current collector.

The positive or negative electrode current collector is not particularly limited as long as it is a chemically stable electronic conductor. Examples of the material constituting the current collector include aluminum and alloys thereof, stainless steel, nickel and alloys thereof, titanium and alloys thereof, carbons, conductive resins, and materials produced by treating the surface of aluminum or stainless steel with carbon or titanium. Among these, aluminum and aluminum alloys are particularly preferable. The surfaces of the materials can be oxidized for use. Further, a surface treatment of providing irregularities on the surface of the current collector is preferable because the treatment increases the adhesion.

The applying (coating) method here may be an ordinary method such as one using a slit-die coater, a reverse roll coater, a lip coater, a blade coater, a knife coater, a gravure coater, or a dip coater.

The electrode mixture slurry can form an electrode when applied to the current collector and dried.

The electrode formed by applying the slurry to the current collector is then heated. The heating may be performed at a temperature in the range of 100°C to 400°C.

The optimal drying conditions and the optimal heating conditions vary depending on whether the binder polymer (I) in the binder is to be left in the electrode or to be completely removed.

In the case of leaving the binder polymer (I) in the electrode, the heating is preferably performed at the pyrolysis temperature of the component (I) or lower. In the case of completely removing the polymer, the heating is preferably performed at the pyrolysis temperature or higher, more preferably at 200°C or higher, and still more preferably at 250°C or higher.

The heating may be performed right after the coating, or after rolling (pressing), or after air drying. Further, the heating may be performed twice or more.

The heated electrode is usually rolled as needed, and is then cut into a predetermined size with a predetermined thickness, whereby an electrode for a lithium secondary cell is obtained. The rolling and cutting may be performed by ordinary methods.

Since the electrode of the present invention has excellent adhesion to the current collector, the electrode has higher flexibility. Accordingly, the electrode does not crack or come off even when wound as in a wound lithium secondary cell.

Yet another aspect of the present invention is a lithium secondary cell. The lithium secondary cell of the present invention is provided with a positive electrode, a negative electrode, and a nonaqueous electrolyte, and the electrode(s) for a lithium secondary cell according to the present invention are/is used as the positive electrode and/or the negative electrode.

In the case of using an electrode other than the electrode of the present invention as one of the positive electrode and the negative electrode, then the one of the positive electrode and the negative electrode may be a known electrode. However, the electrode of the present invention is preferably used for the positive electrode which has a bigger problem in flexibility.

The nonaqueous electrolyte is not particularly limited either, as long as it contains an electrolyte salt and an organic solvent for dissolving the electrolyte salt and is used for a lithium secondary cell.

Examples of the electrolyte include, but not limited to, known electrolyte salts such as $LiPF_6$, $LiBF_4$, $LiN(SO_2CF_3)_2$, and $LiN(SO_2C_2F_5)_2$. Examples of the organic solvent include, but not limited to, hydrocarbon solvents such as ethylene carbonate, dimethyl carbonate, methyl ethyl carbonate, diethyl carbonate, and propylene carbonate; fluorosolvents such as $HCF_2CF_2CH_2OCF_2CF_2H$, $CF_3COOCF_3$, and $CF_3COOCH_2CF_3$; and mixed solvents thereof.

The lithium secondary cell of the present invention may have a separator. Nonlimiting examples of the separator include microporous polyethylene films, microporous polypropylene films, microporous ethylene-propylene copolymer films, microporous polypropylene/polyethylene two-layer films, and microporous polypropylene/polyethylene/polypropylene three-layer films. The examples further include films produced to prevent problems such as a short circuit attributed to Li dendrites and thus to increase the safety, such as a film having a separator coated with an aramid resin, and a film having a separator coated with a resin that contains polyamideimide and an alumina filler (for example, see JP 2007-299612 A and JP 2007-324073 A).

The lithium secondary cell of the present invention is useful as large-sized lithium secondary cells for hybrid cars and distributed power sources, or small-sized lithium secondary cells for cell phones and personal digital assistants.

The electric double layer capacitor of the present invention is provided with the electrode produced as above and a nonaqueous electrolyte.

The electrode used in the present invention is produced from an electrode mixture slurry which contains activated carbon as the electrode active material (J) and the binder composition for an electrode according to the present invention.

The activated carbon serves to increase the capacitance of the electric double layer capacitor, and is not particularly limited as long as it increases the capacitance. An activated carbon is preferably used which has an average particle size of 20 μm or smaller and a specific surface area of 1500 to 3000 $m^2/g$ so that the electric double layer capacitor to be provided has a large capacitance and a low internal resistance. Specific examples of the activated carbon include phenol resin-based activated carbon, coconut shell-based activated carbon, and petroleum coke-based activated carbon. Among these, petroleum coke-based activated carbon and phenol resin-based activated carbon are preferable in terms of larger capacitance, Further, the activation treatment for activating carbon may be steam activation, molten KOH activation, or the like, and activated carbon prepared by the molten KOH activation is preferable in that such activated carbon provides a larger capacitance.

More specific examples thereof include activated carbon particles having a potassium content, measured by the extraction method, of 0 to 200 ppm, and activated carbon particles having an average particle size of 1 to 10 μm and a pore volume of 1.5 $cm^3/g$ or smaller.

The examples of the activated carbon also include natural graphite, artificial graphite, graphitized mesocarbon microbeads, graphitized whiskers, vapor-grown carbon fibers, calcined products of furfuryl alcohol resins, and calcined products of novolak resins.

The electrode mixture slurry may contain additive(s) commonly contained in an electrode for an electric double layer capacitor, as well as the above activated carbon and PTFE. The additive may be, for example, a conductive material.

A conductive material serves to provide electron conductivity by inactive carbon having a large specific surface area, and examples thereof include carbonaceous materials such as carbon black, ketjen black, acetylene black, natural graphite, and artificial graphite; and inorganic materials such as metal fibers, conductive titanium oxide, and ruthenium oxide.

In the electrode components, the amount of PTFE is about 0. 5 to 6 parts by mass for each 100 parts by mass of the activated carbon. In order to obtain higher capacitance, low internal resistance, and high withstand voltage, the amount of PTFE is about 0.5 to 5 parts by mass for each 100 parts by mass of the activated carbon.

For example, in the case of adding a conductive material, the amount thereof is preferably 1 to 20% by mass of the total amount of the conductive material and the activated carbon particles for the reasons that good conductivity (low internal resistance) is obtained and that a very large amount of the conductive material decreases the capacitance of the capacitor.

The method of producing the electrode may be the same as the above method of producing the electrode for a lithium secondary cell.

The electrode may be used for both positive and negative electrodes in production of an electric double layer capacitor. Alternatively, a structure having a non-polarizable electrode as one of the electrodes may be employed; for example, a structure is possible in which the positive electrode mainly contains an active material such as a metal oxide, and the negative electrode is the electrode of the present invention which mainly contains activated carbon.

Any current collector may be used as long as it is corrosion resistant both chemically and electrochemically. If the current collector is used for a polarizable electrode mainly containing activated carbon, then stainless steel, aluminum, titanium, and tantalum are preferable. Among these, stainless steel and aluminum are particularly preferable materials in terms of both the characteristics and price of the electric double layer capacitor to be provided.

The nonaqueous electrolyte preferably has a withstand voltage of 2.5 V or higher. Such a nonaqueous electrolyte having a withstand voltage of 2.5 V or higher preferably contains a nonaqueous solvent and an electrolyte salt. The nonaqueous electrolyte more preferably has a withstand voltage of 3.0 V or higher.

The nonaqueous solvent may be either a fluorosolvent or a fluorine-free solvent as long as the solvent can give a withstand voltage of 2.5 V or higher to the electrolyte.

A preferable fluorosolvent is, for example, a fluorosolvent containing a fluorine-containing cyclic carbonate because it has high withstand voltage and excellent solubility in a wide range of electrolytes.

The solvent containing a fluorine-containing cyclic carbonate preferably contains a fluorine-containing cyclic carbonate represented by the following formula (1) because such a solvent provides large capacitance and high withstand voltage:

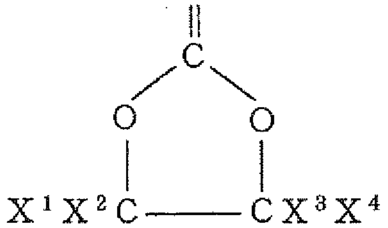

(1)

(wherein $X^1$ to $X^4$ are the same as or different from each other, and each of these is -H, -F, $-CF_3$, $-CHF_2$, $-CH_2F$, $-C_2F_5$ or $-CH_2CF_3$, provided that at least one of $X^1$ to $X^4$ is -F, $-CF_3$, $-C_2F_5$ or $-CH_2CF_3$).

The fluorine-containing cyclic carbonate in the fluorosolvent is preferably at least one selected from the group consisting of the following compounds.

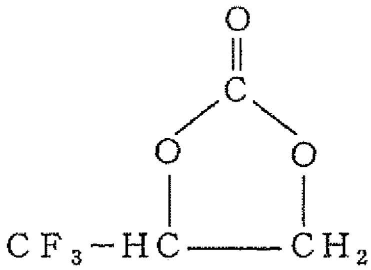
,
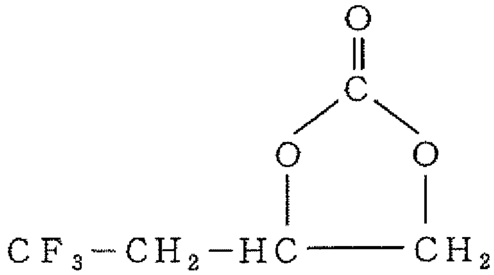
,

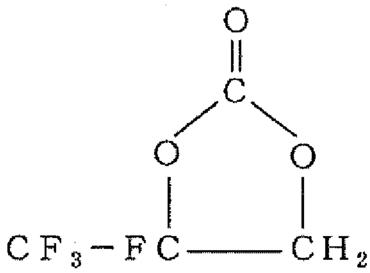
,
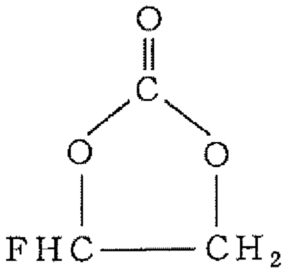
,

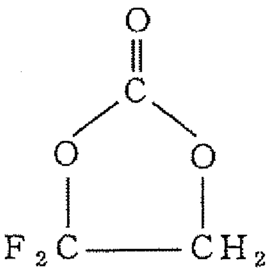
,
and
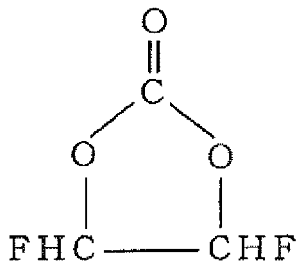

This is because these compounds improve the characteristics of the electric double layer capacitor of the present invention, in terms of particularly excellent characteristics of a high dielectric constant and high withstand voltage, and good solubility of electrolyte salts, and favorable decrease in the internal resistance.

The fluorine content of the fluorine-containing cyclic carbonate is preferably 15 to 55% by mass, and more preferably 17 to 44% by mass, in terms of the dielectric constant and the oxidation resistance.

In addition to the above compounds, for example, the following fluorine-containing cyclic carbonates may be used.

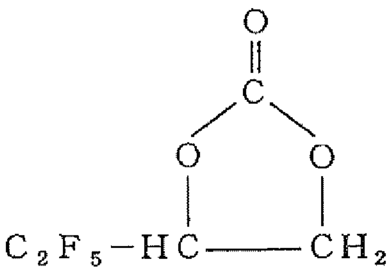
,
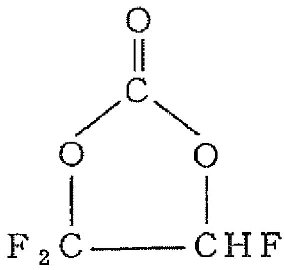
,

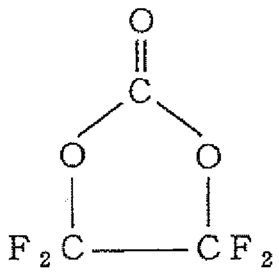,
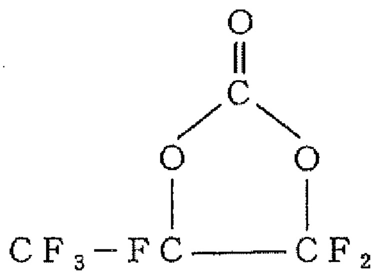,

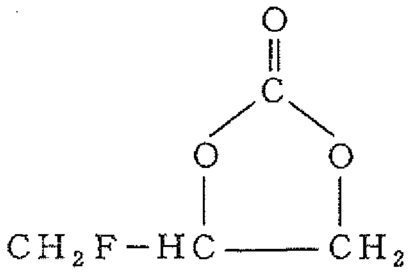,
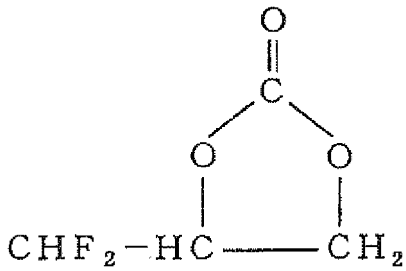

The fluorine-containing cyclic carbonate content in the fluorosolvent is preferably 100 to 20% by volume, and more preferably 90 to 20% by volume, in terms of good dielectric constant and good viscosity.

The fluorosolvent may be a fluorine-containing cyclic carbonate represented by formula (1) used alone, or may be a mixture of the fluorine-containing cyclic carbonate with other fluorine-containing solvent(s) for dissolving an electrolyte salt or fluorine-free solvent (s) for dissolving an electrolyte salt. Since fluorine-containing cyclic carbonates generally have a high melting point, each of these may not be able to function well at low temperatures when used alone. In this case, the fluorosolvent is preferably a mixture of the fluorine-containing cyclic carbonate represented by formula (1) with other fluorine-containing solvent(s) for dissolving an electrolyte salt in order to improve the oxidation resistance, viscosity, and low-temperature characteristics.

Examples of the fluorine-containing solvent for dissolving an electrolyte salt, used as a cosolvent of the fluorine-containing cyclic carbonate represented by formula (1), include fluorine-containing chain carbonates, fluorine-containing chain esters, fluorine-containing chain ethers, fluorine-containing lactones, and fluorine-containing sulfolane compounds.

The fluorine-containing chain carbonate is preferably one represented by the following formula (2) in terms of good viscosity and good oxidation resistance:

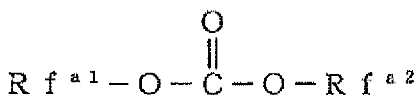 (2)

(wherein $Rf^{a1}$ and $Rf^{a2}$ are the same as or different from each other, and each of these is a C1 to C4 alkyl group or a C1 to C4 fluoroalkyl group, provided that at least one of these is a C1 to C4 fluoroalkyl group).

Among these fluorine-containing chain carbonates, for example, the following ones are preferable.

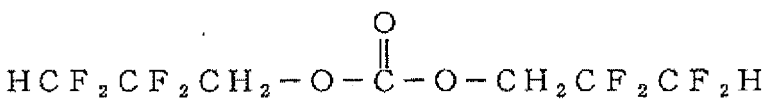,

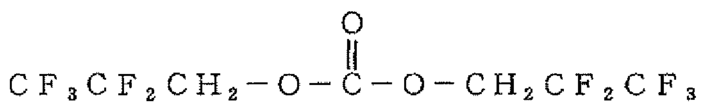,

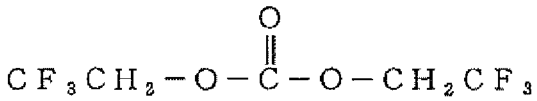
,

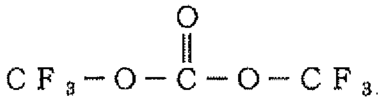
,

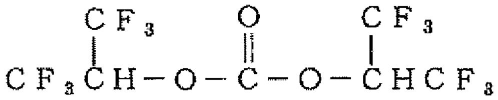

This is because these compounds improve the characteristics of the electric double layer capacitor of the present invention, in terms of particularly excellent characteristics of a high dielectric constant and high withstand voltage, and good solubility of electrolyte salts, favorable decease in the internal resistance, and good low-temperature characteristics.

Further, for example, the following fluorine-containing chain carbonates may also be used.

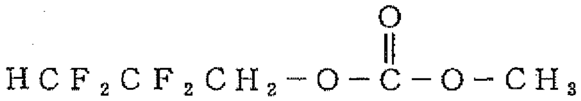
,

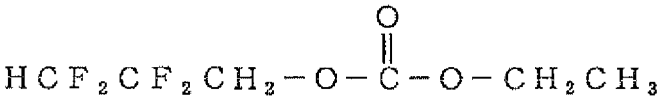
,

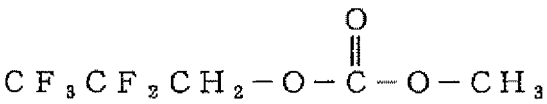
,

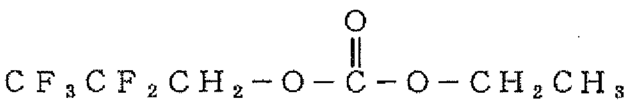
,

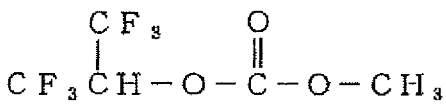
,

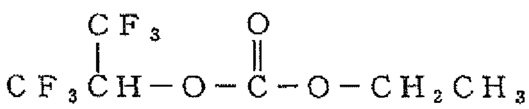
,

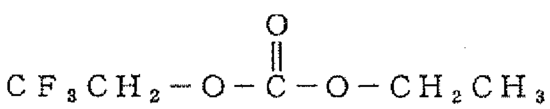
,

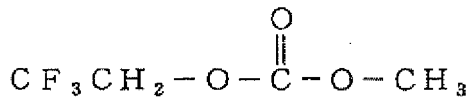

Furthermore, the compounds described in documents such as JP H06-21992 A, JP 2000-327634 A, and JP 2001-256983 A may also be used.

Particularly, the compounds:

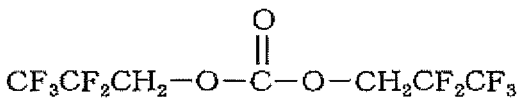
,

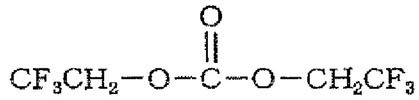
,

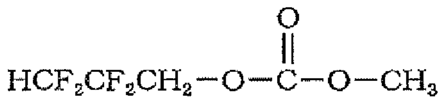
,

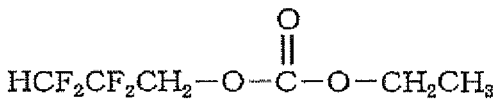
,

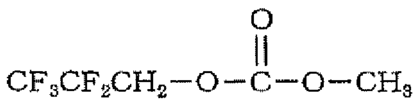
,

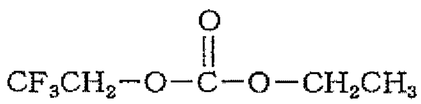
,

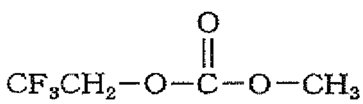

are preferable in terms of good oxidation resistance and good solubility of electrolyte salts.

Examples of the fluorine-containing chain ether include the compounds described in documents such as JP H08-037024 A, JP H09-097627 A, JP H11-026015 A, JP 2000-294281 A, JP 2001-052737 A, and JP H11-307123 A.

Particularly, the fluorine-containing chain ether is preferably a fluorine-containing chain ether represented by the following formula (3-1), in terms of good compatibility with other solvents and appropriate boiling point:

$Rf^{c1}$-O-$Rf^{c2}$ (3-1)

(wherein $Rf^{c1}$ is a C1 to C10 fluoroalkyl group, and $Rf^{c2}$ is a C1 to C4 alkyl group which may contain a fluorine atom).

In the formula (3-1), $Rf^{c2}$ is preferably a fluoroalkyl group because it provides high oxidation resistance, particularly high compatibility with the electrolyte salt, and a high decomposition voltage, and contributes to maintaining the low-temperature characteristics due to its low freezing point, compared to the case that $Rf^{c2}$ is a fluorine-free alkyl group.

Examples of $Rf^{c1}$ include C1 to C10 fluoroalkyl groups such as $HCF_2CF_2CH_2$-, $HCF_2CF_2CF_2CH_2$-, $HCF_{2C}F_2CF_2CF_2CH_2$-, $C_2F_5CH_2$-, $CF_3CFHCF_2CH_2$-, $HCF_2CF(CF_3)CH_2$-, $C_2F_5CH_2CH_2$-, and $CF_3CH_2CH_2$-. Among these, C3 to C6 fluoroalkyl groups are preferable.

Examples of $Rf^{c2}$ include C1 to C4 fluorine-free alkyl groups, $-CF_2CF_2H$, $-CF_2CFHCF_3$, $-CF_2CF_2CF_2H$, $-CH_2CH_2CF_3$, $-CH_2CFHCF_3$, and $-CH_2CH_2C_2F_5$. Among these, C2 to C4 fluoroalkyl groups are preferable.

In particular, a fluorine-containing chain ether particularly preferably contains a C3 or C4 fluoroalkyl group as $Rf^{c1}$ and a C2 or C3 fluoroalkyl group as $Rf^{c2}$ in terms of good ionic conductivity.

Specifically, the fluorine-containing chain ether may be, for example, one or two or more of compounds such as $HCF_2CF_2CH_2OCF_2CF_2H$, $CF_3CF_2CH_2OCF_2CF_2H$, $HCF_2CF_2CH_2OCF_2CFHCF_3$, $CF_3CF_2CH_2OCF_2CFHCF_3$, $HCF_2CF_2CH_2OCH_2CFHCF_3$, and $CF_3CF_2CH_2OCH_2CFHCF_3$. Among these, $HCF_2CF_2CH_2OCF_2CF_2H$, $HCF_2CF_2CH_2OCF_2CFHCF_3$, $CF_3CF_2CH_2OCF_2CFHCF_3$, and $CF_3CF_2CH_2OCF_2CF_2H$ are preferable because they provide a high decomposition voltage and maintain the low-temperature characteristics.

A fluorine-containing ether represented by the following formula (3-2) is also preferable as the fluorine-containing chain ether:

$Rf^{c3}$-O-$Rf^{c4}$ (3-2)

(wherein $Rf^{c3}$ and $Rf^{c4}$ are the same as or different from each other, and each of these is a C2 to C4 fluoroalkyl group).

Particularly, $Rf^{c3}$ may be, for example, $-CH_2CF_2CHF_2$, $-CH_2C_2F_4CHF_2$, $-CH_2CF_3$, $-CH_2C_3F_6CHF_2$, $-CH_2C_2F_5$, $-CH_2CF_2CHFCF_3$, $-CH_2CF(CF_3)CF_2CHF_2$, $-C_2H_4C_2F_5$, or $-C_2H_4CF_3$. Further, $Rf^{c2}$ may preferably be, for example, $-CF_2CHFCF_3$, $-C_2F_4CHF_2$, $-C_2H_4CF_3$, $-CH_2CHFCF_3$, or $-C_2H_4C_2F_5$.

The fluorine-containing chain ester is preferably one represented by the following formula (4) in terms of high flame retardance, good compatibility with other solvents, and good oxidation resistance:

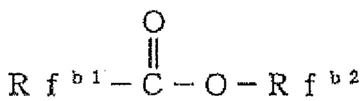

(4)

(wherein $Rf^{b1}$ and $Rf^{b2}$ are the same as or different from each other, and each of these is a C1 to C4 fluoroalkyl group).

Examples of the fluorine-containing chain ester include $CF_3C(=O)OC_2F_5$, $CF_3C(=O)OCH_2CF_3$, $CF_3C(=O)OCH_2CH_2CF_3$, $CF_3C(=O)OCH_2C_2F_5$, $CF_3C(=O)OCH_2CF_2CF_2H$, $CF_3C(=O)OCH(CF_3)_2$, and $CF_3C(=O)OCH(CF_3)_2$. Among these, $CF_3C(=O)OC_2F_5$, $CF_3C(=O)OCH_2C_2F_5$, $CF_3C(=O)OCH_2CF_2CF_2H$, $CF_3C$ (=O) $OCH_2CF_3$, and $CF_3C$ (=O)$OCH(CF_3)_2$ are particularly preferable in terms of good compatibility with other solvents, viscosity, and oxidation resistance.

The fluorine-containing lactone may be, for example, one represented by formula (5):

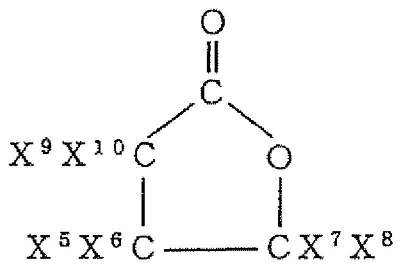

(5)

(wherein $X^5$ to $X^{10}$ are the same as or different from each other, and each of these is -H, -F , -Cl, $-CH_3$ or a fluorine-containing methyl group, provided that at least one of $X^5$ to $X^{10}$ is a fluorine-containing methyl group).

In addition to the fluorine-containing lactone represented by formula (5), for example, a fluorine-containing lactone represented by the following formula (6) may also be used:

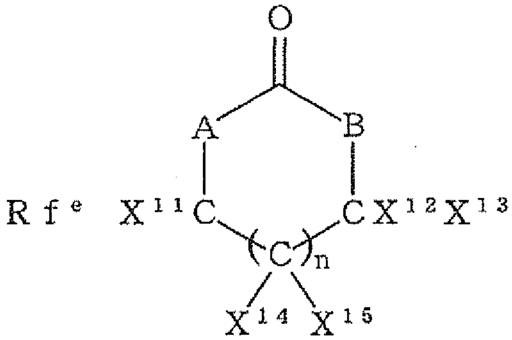

(6)

[wherein one of A and B is $CX^{16}X^{17}$ ($X^{16}$ and $X^{17}$ are the same as or different from each other, and each of these is -H, -F, -Cl, $-CF_3$, $-CH_3$, or an alkyl group which may have a halogen atom substituted for a hydrogen atom and may have a hetero atom in the chain thereof), and the other one is an oxygen atom; $Rf^e$ is a fluoroether group, a fluoroalkoxy group, or a fluoroalkyl group having two or more carbon atoms; $X^{11}$ and $X^{12}$ are the same as or different from each other, and each of these is -H, -F, -Cl, $-CF_3$, or $-CH_3$; $X^{13}$ to $X^{15}$ are the same as or different from each other, and each of these is -H, -F, -Cl, or an alkyl group which may have a halogen atom substituted for a hydrogen atom and may have a hetero atom in the chain thereof; and n is 0 or 1].

Among these, the following compounds are preferable in that they improve the characteristics of the electrolyte in the present invention, in terms of particularly excellent characteristics such as a high dielectric constant and high withstand voltage, and good compatibility with electrolyte salts and favorable decrease in the internal resistance.

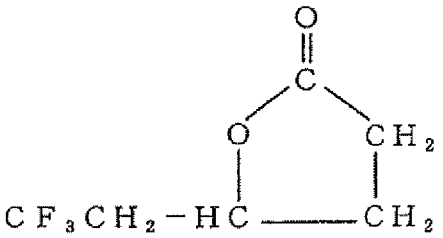

,

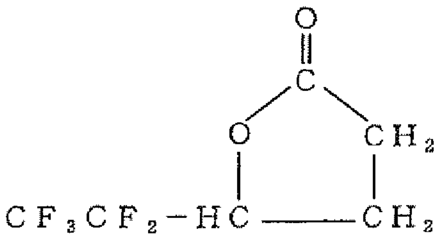

,

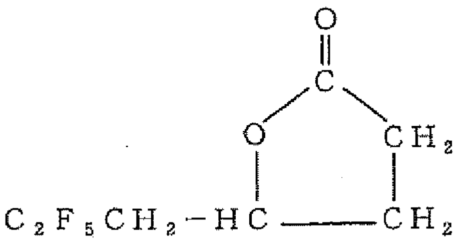

,

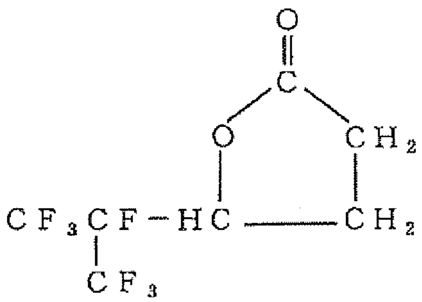

,

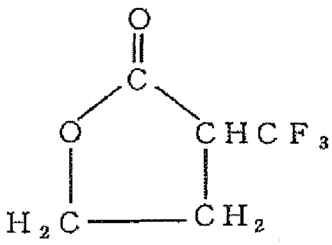

In addition, for example, the following compounds may be used as the fluorine-containing lactone.

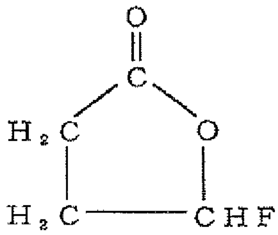 、 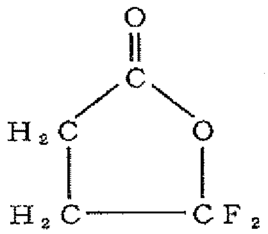 、 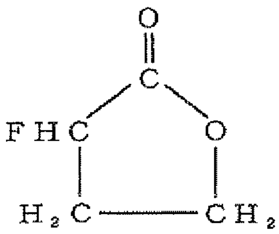 、

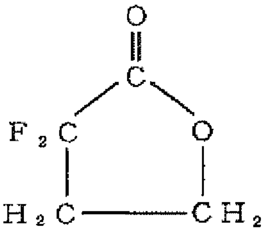 、 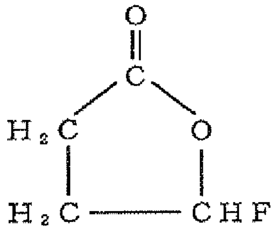 、 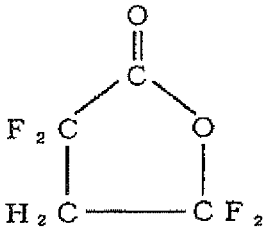

Examples of the fluorine-containing sulfolane compound include the fluorine-containing sulfolane compounds described in JP 2003-132944 A, and particularly, the following ones are preferable.

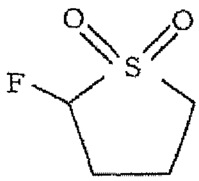 、 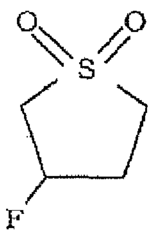 、 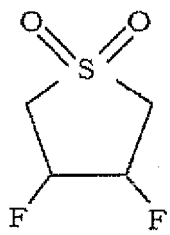 、 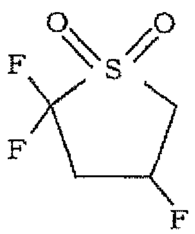 、

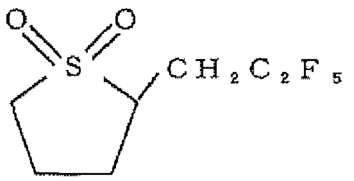 、 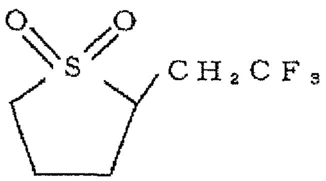 、

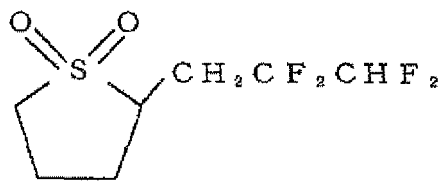

The fluorosolvent may be the fluorine-containing cyclic carbonate represented by formula (1) used alone or a mixture with cosolvent(s) of other fluorine-free solvent(s) or fluorosolvent(s). Preferable examples of the cosolvent as a solvent for dissolving an electrolyte salt include fluorine-containing solvents for dissolving an electrolyte salt in terms of good oxidation resistance and good viscosity. More preferable are fluorine-containing chain carbonates, fluorine-containing chain esters, and fluorine-containing chain ethers. Particularly in the case of operation at a high voltage of 3.5 V or higher, the fluorosolvent to be used is preferably one containing only the fluorine-containing cyclic carbonate represented by formula (1) and at least one selected from the group consisting of fluorine-containing chain carbonates, fluorine-containing chain esters, and fluorine-containing chain ethers. Among these, fluorine-containing chain ethers are preferable in terms of good oxidation resistance.

Particularly preferable combination of the fluorine-containing cyclic carbonate and the fluorine-containing chain

ether, particularly in terms of good oxidation resistance and good solubility of electrolyte salts, is a mixture of fluorine-containing cyclic carbonate(s) represented by

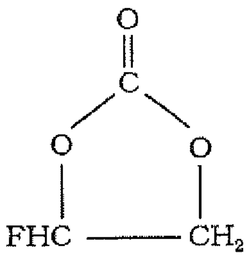

and/or

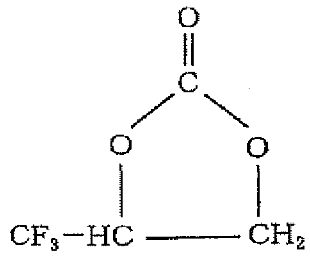

and at least one fluorine-containing chain ether selected from the group consisting of $CF_3CF_2CH_2$-O-$CF_2CFHCF_3$, $HCF_2CF_2CH_2$-O-$CF_2CFHCF_3$, $CF_3CF_2CH_2$-O-$CF_2CF_2H$ and $HCF_2CF_2CH_2$-O-$CF_2CF_2H$.

Examples of the fluorine-free solvent include fluorine-free cyclic carbonates, fluorine-free chain carbonates, fluorine-free chain esters, fluorine-free chain ethers, fluorine-free lactones, fluorine-free sulfolane compounds, nitrile compounds, and other fluorine-free solvents for dissolving an electrolyte salt.

Examples of the fluorine-free cyclic carbonate include the following compounds.

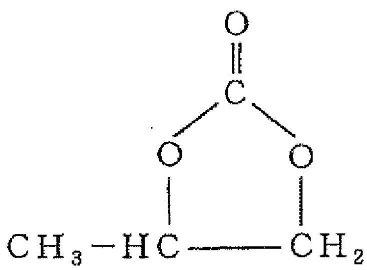

、

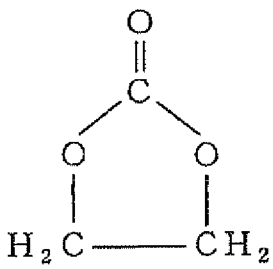

、

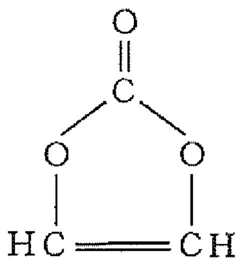

A chain carbonate represented by the following formula (7), for example, is preferable as the fluorine-free chain carbonate:

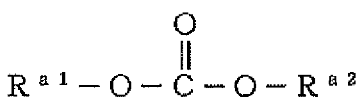

(7)

(wherein $R^{a1}$ and $R^{a2}$ are the same as or different from each other, and each of these is a C1 to C4 alkyl group).

Among the fluorine-free chain carbonates, for example, the following compounds are preferable because these compounds improve the characteristics of the electric double layer capacitor of the present invention, in terms of particularly excellent characteristics of a high dielectric constant and high withstand voltage, and good solubility of electrolyte salts, and favorable decease in the internal resistance.

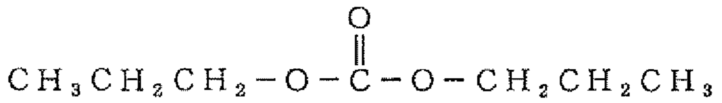,

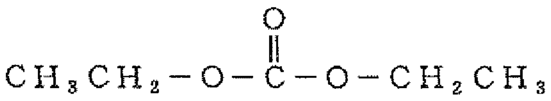,

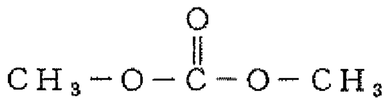,

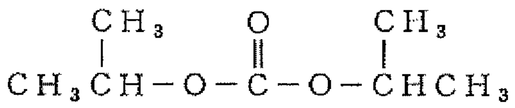,

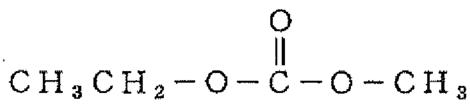

In addition, for example, the following compounds can be used as the fluorine-free chain carbonate.

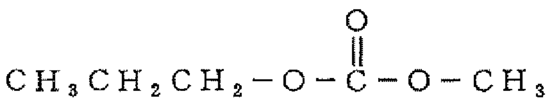,

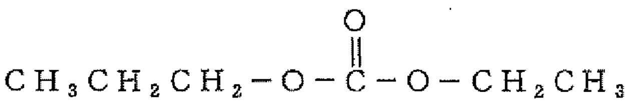,

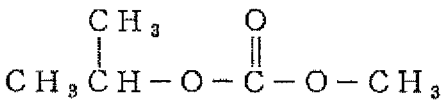,

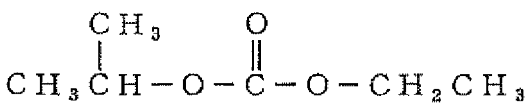

Examples of the fluorine-free sulfolane compound include sulfolane, and fluorine-free sulfolane derivatives represented by

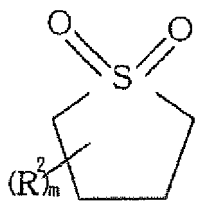

(wherein $R^2$ is a C1 to C4 alkyl group, and m is an integer of 1 or 2).

Among these, at least one selected from the group consisting of the following sulfolane and sulfolane derivatives is preferable, and sulfolane is particularly preferable.

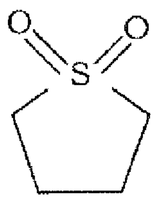
,
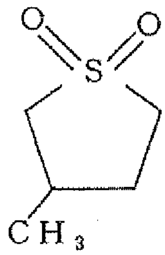
,
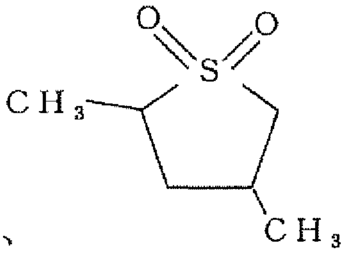

Examples of the nitrile compound include ones represented by the following formula:

$R^1$-$(CN)_n$

(wherein $R^1$ is a C1 to C10 alkyl group or a C1 to C10 alkylene group, and n is an integer of 1 or 2).

In the above formula, $R^1$ is a C1 to C10 alkyl group if n is 1, and $R^1$ is a C1 to C10 alkylene group if n is 2.

Examples of the alkyl group include C1 to C10 alkyl groups such as methyl, ethyl, propyl, isopropyl, butyl, isobutyl, tert-butyl, pentyl, neopentyl, hexyl, heptyl, octyl, nonyl, and decyl. Particularly, methyl and ethyl groups are preferable.

Examples of the alkylene group include C1 to C10 alkylene groups such as methylene, ethylene, propylene, butylene, pentylene, hexylene, octylene, nonylene, and decylene. Particularly, propylene and ethylene groups are preferable.

Specific examples of the nitrile compound include acetonitrile ($CH_3$-CN), propionitrile ($CH_3$-$CH_2$-CN), and glutaronitrile (NC-$(CH_2)_3$-CN). Particularly, acetonitrile and propionitrile are preferable in terms of the low resistance.

The above nonaqueous solvent may contain other solvent (s) which can be blended. Examples of the other solvent(s) which can be blended include fluorine-containing cyclic ethers such as the following compounds; furans; and oxolanes.

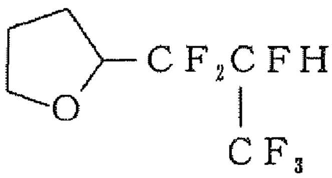
,
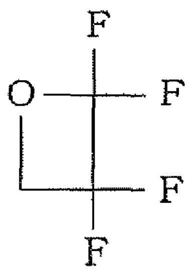

In one preferable form of the nonaqueous solvent, the nonaqueous solvent contains a sulfolane compound and a fluorine-containing chain ether. If the nonaqueous solvent contains a sulfolane compound and a fluorine-containing chain ether, then the solvent contributes to production of an electric double layer capacitor having a high withstand voltage and excellent long term reliability. The sulfolane compound is preferably at least one selected from the group consisting of the above fluorine-containing sulfolane compounds and the above fluorine-free sulfolane compounds.

The proportion of the sulfolane compound in the nonaqueous solvent is preferably 100% by volume or lower, more preferably 90% by volume or lower, and particularly preferably 75% by volume or lower, but preferably 10% by volume or higher. With the proportion of the sulfolane compound in this range, the nonaqueous solvent can maintain the withstand voltage in a more favorable manner, and provide an excellent effect of decreasing the internal resistance.

The proportion of the fluorine-containing chain ether in the nonaqueous solvent is preferably 90% by volume or lower, more preferably 80% by volume or lower, and particularly preferably 75% by volume or lower, but preferably 5% by volume or higher. With the proportion of the fluorine-containing chain ether in this range, the nonaqueous solvent can maintain the withstand voltage, and provide an excellent effect of decreasing the internal resistance.

The total proportion of the sulfolane compound and the fluorine-containing chain ether in the nonaqueous

solvent is preferably 50 to 100% by volume, more preferably 60 to 100% by volume, and particularly preferably 70 to 100% by volume.

The proportion of the other solvents (s) in the nonaqueous solvent is preferably 50% by volume or lower, more preferably 40% by volume or lower, and particularly preferably 30% by volume or lower.

In another preferable form of the nonaqueous solvent, the nonaqueous solvent contains a fluorine-containing chain ether and a nitrile compound. If the nonaqueous solvent contains a fluorine-containing chain ether and a nitrile compound, an electric double layer capacitor to be produced can have a high withstand voltage, low level of degradation, excellent long term reliability, and particularly, an excellent effect of suppressing the expansion. Further, the high withstand voltage leads to larger capacitance for energy storage, and thus the electric double layer capacitor can have a large energy capacitance.

The volume ratio of the fluorine-containing chain ether to the nitrile compound is preferably 90/10 to 1/99, more preferably 40/60 to 1/99, and still more preferably 30/70 to 1/99. The volume ratio in this range enables to maintain the withstand voltage, achieve an excellent effect of decreasing the internal resistance, and more strongly suppress the expansion.

The total proportion of the fluorine-containing chain ether and the nitrile compound in the nonaqueous solvent is preferably 50 to 100% by volume, more preferably 60 to 100% by volume, and still more preferably 70 to 100% by volume.

In the case that the nonaqueous solvent contains solvent(s) other than the fluorine-containing chain ether and the nitrile compound, then the proportion of the other solvent(s) is preferably less than 50% by volume, more preferably less than 40% by volume, and still more preferably less than 30% by volume, of the nonaqueous solvent.

Yet another preferable form of the nonaqueous solvent is that the nonaqueous solvent contains a fluorine-containing chain ether, a nitrile compound, and any of the above sulfolane compounds. If the nonaqueous solvent contains any of the sulfolane compounds, the proportion of the sulfolane compound is preferably less than 40% by volume, more preferably less than 30% by volume, and still more preferably less than 20% by volume, of the nonaqueous solvent. Addition of the sulfolane compound in the above proportion range is preferable because it enables to increase the long-term reliability.

Examples of the electrolyte salt include liquid salts (ionic liquids), inorganic polymer salts, and organic polymer salts, as well as known ammonium salts and metal salts.

Particularly in the case that the fluorine-containing cyclic carbonate represented by the above formula (1) is used as the fluorosolvent, a cyclic quaternary onium salt formed from a cyclic quaternary onium cation and an anion of $PF_6^-$, $N(O_2SC_2F_5)_2$ or $N(O_2SCF_3)$ is preferable.

Preferable examples of spiro-bipyrrolidinium salts include compounds represented by formula (10-1):

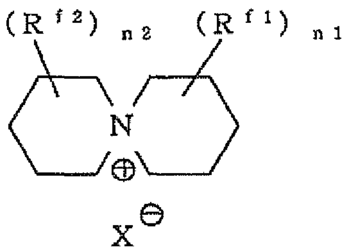

(10-1)

(wherein $R^{f1}$ and $R^{f2}$ are the same as or different from each other, and each of these is a C1 to C4 alkyl group; $X^-$ is an anion; n1 is an integer of 0 to 5; and n2 is an integer of 0 to 5); formula (10-2):

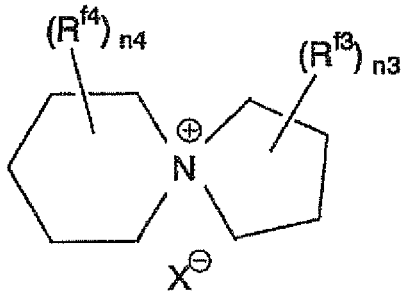

(10-2)

(wherein $R^{f3}$ and $R^{f4}$ are the same as or different from each other, and each of these is a C1 to C4 alkyl group; $x^-$ is an anion; n3 is an integer of 0 to 5; and n4 is an integer of 0 to 5); and formula (10-3):

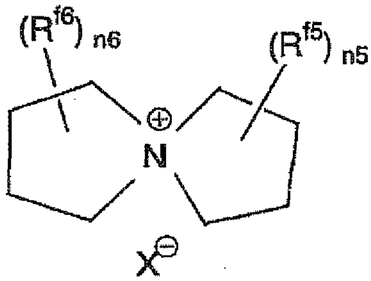

(10-3)

(wherein $R^{f5}$ and $R^{f6}$ are the same as or different from each other, and each of these is a C1 to C4 alkyl group; $X^-$ is an anion; n5 is an integer of 0 to 5; and n6 is an integer of 0 to 5). Further, a part of or all of the hydrogen atoms of these spiro-bipyrrolidinium salts may be substituted with fluorine atom(s) and/or C1 to C4 fluoroalkyl group(s), and such salts are also preferable in that the oxidation resistance is increased.

The anion $X^-$ may be an inorganic anion or an organic anion. Examples of the inorganic anion include $AlCl_4^-$, $BF_4^-$, PF6-, $AsF_6^-$, $TaF_6^-$, $I^-$, and $SbF_6^-$. Examples of the organic anion include $CH_3COO^-$, $CF_3SO_3^-$, $(CF_3SO_2)_2N^-$, and $(C_2F_5SO_2)_2N^-$. Among these, $BF_4^-$, $PF_6^-$, $(CF_3SO_2)_2N^-$, and $(C_2F_5SO_2)_2N^-$ are preferable in terms of the high dissociation and the low internal resistance under high voltages. Particularly, $PF_6^-$ is more preferable.

Specific preferable examples of the spiro-bipyrrolidinium salt include the following compounds.

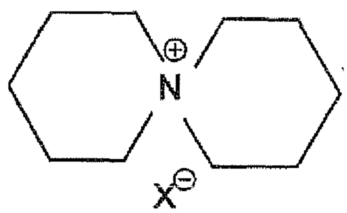

,

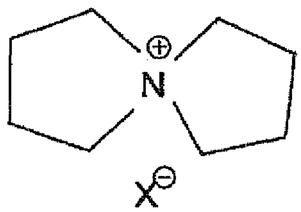

,

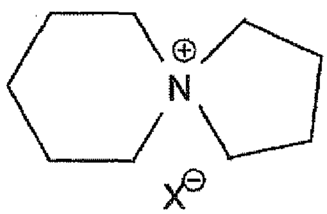

These spiro-bipyrrolidinium salts are excellent in the solubility in solvents, the oxidation resistance, and the ionic conductivity.

Preferable examples of imidazolium salts include compounds represented by formula (11):

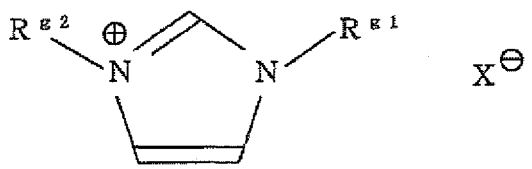

(11)

(wherein $R^{g1}$ and $R^{g2}$ are the same as or different from each other, and each of these is a C1 to C6 alkyl group: and $X^-$ is an anion) . Further, a part of or all of the hydrogen atoms of these imidazolium salts may be substituted with fluorine

atom(s) and/or C1 to C4 fluoroalkyl group(s), and such salts are also preferable in that the oxidation resistance is increased.

Specific preferable examples of the anion $X^-$ are the same as those of the spiro-bipyrrolidinium salt.

Specific preferable examples of the imidazolium salt include ethyl methyl imidazolium salts represented by formula (12):

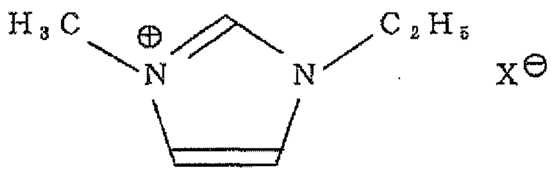

(12)

(wherein $X^-$ is an anion).

Such an imidazolium salt has low viscosity, and has excellent solubility in solvents.

Preferable examples of tetraalkyl quaternary ammonium salts include tetraalkyl quaternary ammonium salts represented by formula (13):

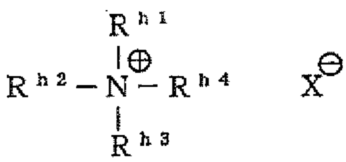

(13)

(wherein $R^{h1}$, $R^{h2}$, $R^{h3}$, and $R^{h4}$ are the same as or difference from each other, and each of these is a C1 to C6 alkyl group which may contain an ether bond; and $X^-$ is an anion). Further, a part of or all of the hydrogen atoms of these tetraalkyl quaternary ammonium salts may be substituted with fluorine atom(s) and/or C1 to C4 fluoroalkyl group(s), and such salts are also preferable in that the oxidation resistance is increased.

Specific examples thereof include tetraalkyl quaternary ammonium salts represented by formula (13-1):

$(R^{h1})_x (R^{h2})_y N^{\oplus} X^{\ominus}$ (13-1)

(wherein $R^{h1}$, $R^{h2}$, and $X^-$ are as defined in formula (13); x and y are the same as or different from each other, and each of these is an integer of 0 to 4; and x + y = 4); and alkyl ether-containing trialkyl ammonium salts represented by formula (13-2):

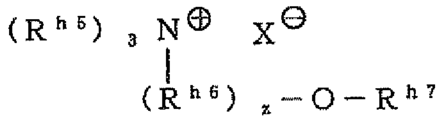

(13-2)

(wherein $R^{h5}$ is a C1 to C6 alkyl group; $R^{h6}$ is a C1 to C6 divalent hydrocarbon group; $R^{h7}$ is a C1 to C4 alkyl group; z is 1 or 2; and $X^-$ is an anion). Incorporation of an alkyl ether group contributes to a decrease in the viscosity.

Specific preferable examples of the anion $X^-$ are the same as those of the spiro-bipyrrolidinium salt.

Specific suitable examples of the tetraalkyl quaternary ammonium salt include $Et_4NBF_4$, $Et_4NClO_4$, $Et_4NPF_6$, $Et_4NAsF_6$, $Et_4NSbF_6$, $Et_4NCF_3SO_3$, $Et_4N(CF_3SO_2)_2N$, $Et_4NC_4F_9SO_3$, $Et_3MeNBF_4$, $Et_3MeNClO_4$, $Et_3MeNPF_6$, $Et_3MeNAsF_6$, $Et_3MeNSbF_6$, $Et_3MeNCF_3SO_3$, $Et_3MeN (CF_3SO_2)_2N$, and $Et_3MeNC_4F_9SO_3$. Particularly, for example, $Et_4NBF_4$, $Et_4NPF_6$, $Et_4NSbF_6$, and $Et_4NAsF_6$ are preferable.

Preferable examples of N-alkylpyridinium salts include compounds represented by formula (14):

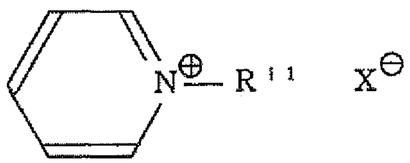

(14)

(wherein $R^{i1}$ is a hydrogen atom or a C1 to C6 alkyl group; and $X^-$ is an anion) Further, a part of or all of the hydrogen atoms of these N-alkylpyridinium salts may be substituted with fluorine atom(s) and/or C1 to C4 fluoroalkyl group(s), and such salts are also preferable in that the oxidation resistance is increased.

Specific preferable examples of the anion $X^-$ are the same as those of the spiro-bipyrrolidinium salt.

Specific preferable examples include the following compounds.

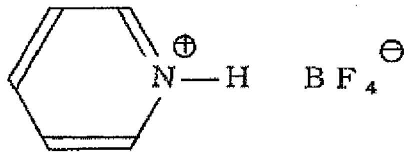
,
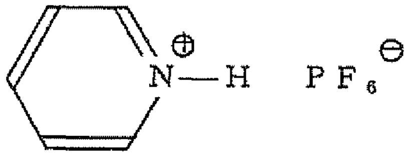
,

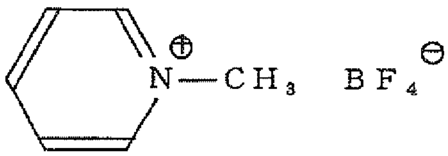
,
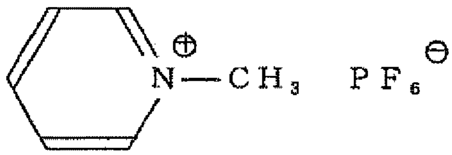
,

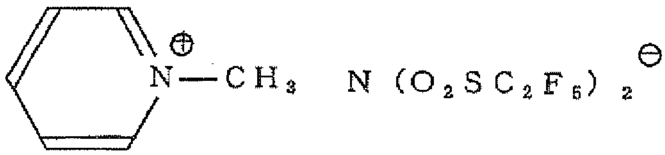
,

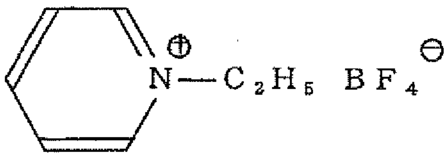
,
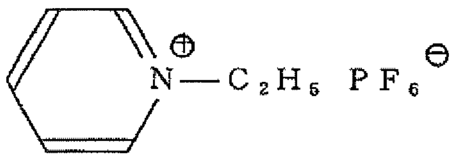
,

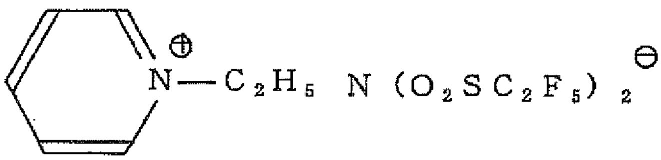

Such an N-alkylpyridinium salt has low viscosity, and has excellent solubility in solvents.

Preferable examples of N,N-dialkylpyrrolidinium salts include compounds represented by formula (15):

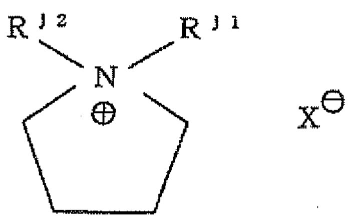
(1 5)

(wherein $R^{j1}$ and $R^{j2}$ are the same as or different from each other, and each of these is a C1 to C6 alkyl group; and $X^-$ is an anion). Further, a part of or all of the hydrogen atoms of these N,N-dialkylpyrrolidinium salts may be substituted with fluorine atom(s) and/or C1 to C4 fluoroalkyl group (s), and such salts are also preferable in that the oxidation resistance is increased.

Specific preferable examples of the anion $X^-$ are the same as those of the spiro-bipyrrolidinium salt.

Specific preferable examples include the following compounds.

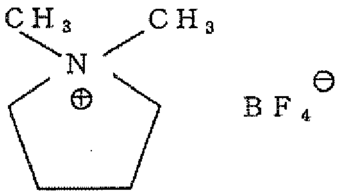 , 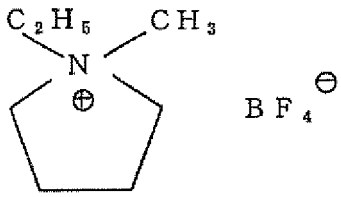 ,

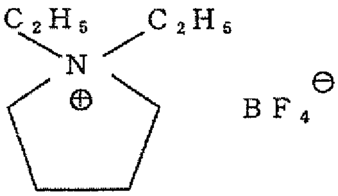 , 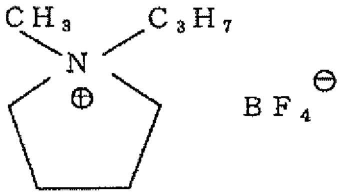 ,

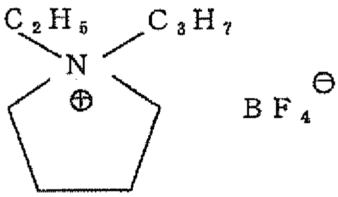 ,

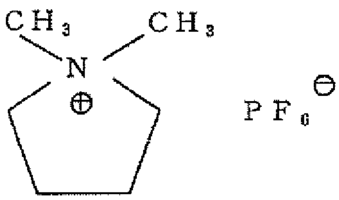 , 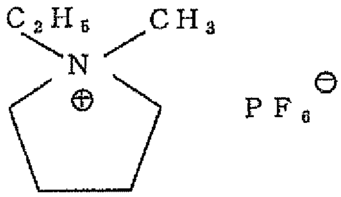 ,

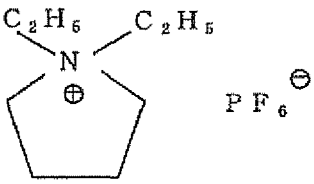 , 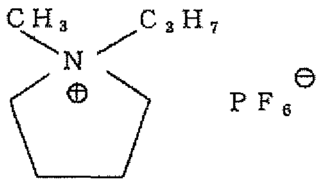 ,

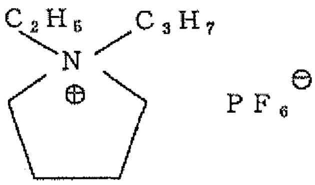 ,

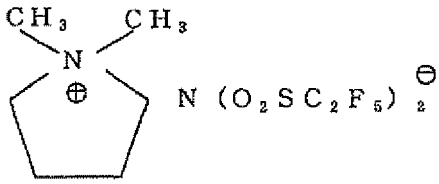 ,

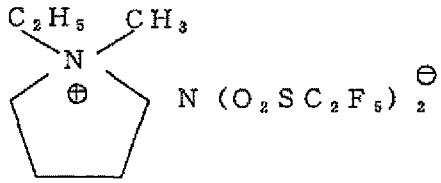
,

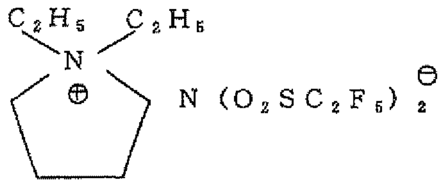
,

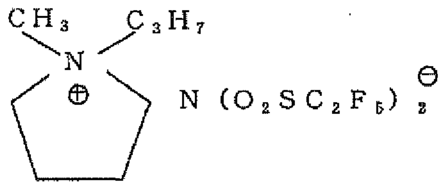
,

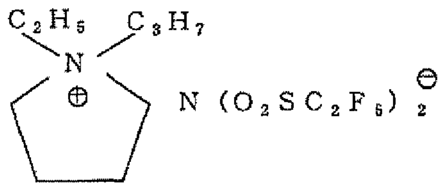

Such an N,N-dialkylpyrrolidinium salt has low viscosity, and has excellent solubility in solvents.

Among these ammonium salts, spiro-bipyrrolidinium salts and imidazolium salts are preferable in terms of the solubility in solvents, oxidation resistance and ionic conductivity, and further, the following ones are preferable.

$(Me)_x(Et)_yN^{\oplus}x^{\ominus}$

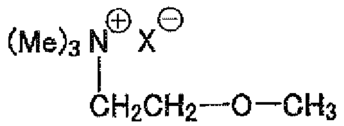
,

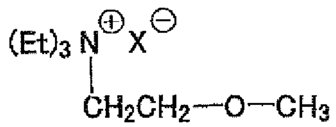
,

(wherein Me is a methyl group; Et is an ethyl group; $X^-$ is $PF_6^-$, $(CF_3SO_2)_2N^-$, or $(C_2F_5SO_2)_2N^-$, and is particularly preferably $PF_6^-$; x and y are the same as or different from each other, and each of these is an integer of 0 to 4; and x + y = 4);

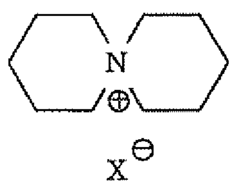

(wherein $X^-$ is $PF_6^-$, $(CF_3SO_2)_2N^-$ or $(C_2F_5SO_2)_2N^-$, and is particularly preferably $PF_6^-$); and

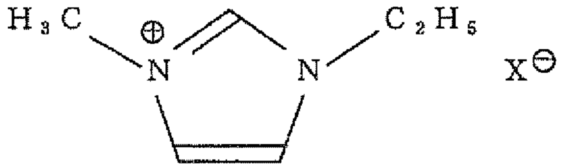

(wherein $X^-$ is $PF_6^-$, $(CF_3SO_2)_2N^-$ or $(C_2F_5SO_2)_2N^-$, and is particularly preferably $PF_6^-$).

Further, the electrolyte salt may be combined with a lithium salt. Preferable examples of the lithium salt include $LiPF_6$, $LiBF_4$, $LiAsF_6$, $LiSbF_6$, and $LiN(SO_2C_2H_5)_2$.

In order to increase the capacitance, a magnesium salt may be used. Preferable examples of the magnesium salt include $Mg(ClO_4)_2$ and $Mg(OOC_2H_5)_2$.

The level of addition of the electrolyte salt varies according to the required current density, the application, the kind of the electrolyte salt, and the like. The level of addition is preferably 0.1 parts by mass or more, more preferably 1 part by mass or more, and particularly preferably 5 parts by mass or more, but preferably 200 parts by mass or less, more preferably 100 parts by mass or less, and particularly preferably 50 parts by mass or less, for each 100 parts by mass of the nonaqueous solvent.

The electrolyte used in the present invention is prepared by dissolving the electrolyte salt in the nonaqueous solvent.

In the present invention, the electrolyte may be combined with a polymer material that dissolves or swells in the solvent of the electrolyte in the present invention so as to be a gel electrolyte in a (plasticized) gel form.

Examples of such a polymer material include known polyethylene oxide, polypropylene oxide, and derivatives thereof (JP H8-222270 A, JP 2002-100405 A); polyacrylate polymers, polyacrylonitrile, and fluororesins such as polyvinylidene fluoride and a vinylidene fluoride-hexafluoropropylene copolymer (JP H4-506726 T, JP H8-507407 T, JP H10-294131 A); complexes of those fluororesins and hydrocarbon resins (JP H11-35765 A, JP H11-86630 A). Particularly, polyvinylidene fluoride and a vinylidene fluoride-hexafluoropropylene copolymer are preferably used as the polymer material for a gel electrolyte.

In addition, the ion-conductive compounds described in the Japanese Patent Application No. 2004-301934 can also be used.

The electrolyte used in the present invention may contain other additives according to need. Examples of the other additives include metal oxides and glass.

Such an electrolyte can simultaneously increase the flame retardance, the low-temperature characteristics, the solubility of the electrolyte salt, and the compatibility with hydrocarbon solvents, and can give stable characteristics at a withstand voltage of 2.5 V or higher, or even higher than 3.5 V, or particularly higher than 4.0 V. Accordingly, the electrolyte is excellent as an electrolyte for an electric double layer capacitor.

In the electric double layer capacitor according to the present invention such as a wound electric double layer capacitor, the electrodes are usually wound with a separator or a current collector placed therebetween to form a wound element. The separator and current collector may be known ones used without any change. The electric double layer capacitor is assembled by putting the nonaqueous electrolyte and the wound element into a casing made of aluminum or the like, and tightly sealing the casing with a sealing material made of rubber.

Further, the electric double layer capacitor may form a laminated electric double layer capacitor or a coin-shaped electric double layer capacitor by a known method.

## EXAMPLES

Now, the present invention will be described based on examples which, however, are not intended to limit the scope of the present invention.

The measuring methods in the examples and comparative examples are described below.

(1) Solids concentration of aqueous dispersion or organosol

An amount of 10 g of an aqueous dispersion or organosol of PTFE or the like is placed on a petri dish, and then heated at 150°C for about three hours. The resulting solids content is weighed, and the proportion of the mass of the solids content to the mass of the aqueous dispersion or organosol is calculated which is considered as the solids concentration.

(2) Average particle size

A working curve is constructed which shows the relation between the transmittance of incident light rays having a wavelength of 550 nm of a cell filled with a PTFE aqueous dispersion adjusted to a solids content of 0.15% by mass and the number average primary particle size determined by particle size measurements in a certain specific direction on a transmission electron photomicrograph, and the average primary particle size of a sample is determined, using the working curve, from the transmittance of the sample as measured in the above manner.

(3) Standard specific gravity [SSG]

The standard specific gravity is measured by a water displacement method based on ASTM D 4895-89.

(4) Polymer melting point

With a DSC device (produced by SEIKO Instruments Inc.), 3 mg of each sample is measured, heated to a temperature higher than the melting point at a heating rate of 10°C/min, and then cooled at the same rate. The sample was heated again at the same rate in the second run, and the melting peak, which is to be taken as the melting point, is read.

(5) Measurement of composition ratio of

polytetrafluoroethylene particles (A) to polymer (B) in organosol composition by solid state NMR

The organosol composition or the hydrous coagulum (E) obtained in the separation step (III) for the preparation of the organosol composition is vacuum-dried at 120°C. The obtained sample is measured with a solid state NMR spectrometer (produced by BRUKER) to obtain a spectrum. Based on the area ratio of peaks from PTFE to those from the polymer (B) in the spectrum, the composition ratio is calculated.

Preparation Example 1 (Preparation of aqueous dispersion of PTFE particles)

A 6-L SUS stainless steel polymerization vessel with a stirrer was charged with 3500 g of a solution obtained by dissolving an emulsifier $CF_3OCF(CF_3)CF_2OCF(CF_3)COONH_4$ in pure water to a concentration of 0.15% by mass, and 100 g of granular paraffin wax, and was then sealed. The atmosphere in the vessel was evacuated and replaced with nitrogen, and the vessel was then evacuated. Thereafter, tetrafluoroethylene (TFE) was added to the vessel under stirring at 85°C and 265 rpm until the pressure reached 0.7 MPaG. To the vessel, 20 g of an aqueous solution containing 525 mg of disuccinic acid peroxide (DSP) was added under nitrogen pressure. An amount of 20 g of water was added again under nitrogen pressure to rinse the reaction pipe such that no solution was left in the pipe. The TFE pressure was then set to 0.8 MPa, the stirring speed was maintained at 265 rpm and the internal temperature was maintained at 85°C. One hour after the addition of DSP, a solution obtained by dissolving 19 mg of ammonium persulfate (APS) in 20 g of pure water was added under nitrogen pressure. An amount of 20g of water was added again under nitrogen pressure to rinse the reaction pipe such that no solution was left in the pipe. Additional TFE was then added to maintain the internal pressure of the vessel at 0.8 MPa. The stirring was stopped when the amount of the additional monomer reached 1195 g, the gas in the vessel was blown away, and the reaction was terminated. The content of the vessel was cooled, and recovered in a plastic container, whereby an aqueous dispersion of PTFE particles was obtained. The solids concentration of the aqueous dispersion determined by a dry weight method was 31.4% by mass. The average primary particle size of the particles in the aqueous dispersion was 0.29 μm.

In order to measure the standard specific gravity and the melting point, 500 ml of the obtained aqueous dispersion of PTFE particles was diluted by deionized water until the solids concentration reached about 15% by mass. To the diluted aqueous dispersion was added 1 ml of nitric acid, and the dispersion was stirred vigorously until the dispersion was coagulated. The obtained coagulum was dried at 145°C for 18 hours, and thereby PTFE powder was obtained. The standard specific gravity [SSG] of the obtained PTFE powder was measured and found to be 2.189, and the melting point analyzed by DSC was 325.9°C.

Preparation Example 2 (Preparation of aqueous dispersion of TFE-HFP-VdF copolymer)

A 3-L SUS stainless steel polymerization vessel with a stirrer was charged with a solution obtained by dissolving $F(CF_2)_5COONH_4$ and $CH_2=CFCF_2OCF(CF_3)CF_2OCF(CF_3)COONH_4$ in pure water to concentrations of 3300 ppm and 200 ppm, respectively, and was then sealed. The atmosphere in the vessel was evacuated and replaced with nitrogen, and the vessel was then evacuated and added with 400 cc equivalent of ethane as a chain transfer agent through a

syringe under vacuum. Then, a monomer gas mixture having a VdF/TFE/HFP composition ratio of 50/38/12 mol% was added to the vessel under stirring at 70°C and 450 rpm until the pressure reached 0.39 MPaG. Then, an aqueous solution prepared by dissolving 137.2 mg of APS in 10 g of water was added under nitrogen pressure so as to initiate the reaction. An amount of 10 g of water was added again under nitrogen pressure such that no solution was left in the reaction pipe.

To the vessel was added an additional monomer mixture having a VdF/TFE/HFP composition ratio of 60/38/2 mol% so that the internal pressure in the vessel was maintained. The stirring was slowed down when the amount of the additional monomer reached 346 g. Then, the gas in the vessel was blown away, and the reaction was terminated. The content of the vessel was cooled and 1708 g of an aqueous dispersion of VdF/TFE/HFP copolymer (hereinafter, "THV") particles was recovered in a container. The solids concentration of the aqueous dispersion determined by a dry weight method was 20.4% by mass. The copolymer composition determined by NMR analysis was VdF/TFE/HFP = 59.0/38.9/2.1 (mol%), and the melting point analyzed by DSC was 145.9°C.

Preparation Example 3 (Preparation of PTFE organosol (PTFE/THV = 53/47 [mass ratio]))

A 200-mL beaker was charged with 40.0 g of the aqueous dispersion of PTFE particles (PTFE particles (A)) obtained in Preparation Example 1, 61.5 g of the aqueous dispersion of THV particles (polymer (B)) obtained in Preparation Example 2, and 16 g of hexane. The mixture was stirred with a mechanical stirrer. An amount of 60 g of acetone was added while the mixture was stirred, and then the stirring was performed for three minutes. After the stirring, the resulting coagulum and the supernatant mainly containing water were separated by filtration. The obtained hydrous coagulum was mixed with about 150 g of NMP, and the mixture was stirred for five minutes. The mixture was then put in a 500-ml recovery flask, and the water was evaporated by an evaporator, so that 120 g of a PTFE organosol was obtained in which PTFE particles were uniformly dispersed in NMP. The measured solids concentration of this organosol was 18.5% by mass, and the water concentration measured by the Karl-Fischer method was not higher than 100 ppm. The mass ratio of PTFE/THV measured by solid state NMR was 53/47. Also, the organosol was left to stand still and observed by eye. The organosol showed no separated layers or particles even after 10 or more days.

The organosol was tested for the dispersion storage stability by the following Test 1.

Test 1 (dispersion storage stability)

A part of the PTFE organosol prepared in Preparation Example 3 was diluted with NMP to prepare organosols having a solids concentration of 2% by mass and of 5% by mass. The organosols were irradiated with ultrasonic waves for 30 minutes, and were then left to stand still for 48 hours. Then, the supernatant of each organosol was collected and measured for the solids concentration, so that the precipitation ratio of the PTFE particles was calculated. Table 1 shows the results.

Here, "the precipitation ratio of the PTFE particles" after 48 hours is calculated by the following method in the case of the organosol having a solids concentration of 5% by mass. To a transparent glass screw tube No. 3 (volume: 10 ml, a product of Maruemu Corporation) is added 8 ml of the organosol composition having a total solids concentration of the PTFE particles (A) and the polymer (B) of 5% by mass. The organosol is irradiated with ultrasonic waves for 30 minutes by an ultrasonic cleaner of BRANSONIC (registered trademark) B-521 produced by BRANSON CLEANING EQUIPMENT COMPANY. The organosol is left to stand still for 48 hours, and then the supernatant thereof is collected and measured for the solids concentration. Using the measured concentration, the precipitation ratio of the PTFE particles (A) is calculated from the following formula. Here, the polymer (B) is assumed to be completely dissolved in the fluorine-free organic solvent (C) in the supernatant. The precipitation ratio is preferably 60% or lower, and more preferably 50% or lower.

The precipitation ratio of the organosol having a solids concentration of 2% by mass is calculated by the same method.

PTFE precipitation ratio (%) = [{Initial PTFE concentration - (Solids concentration of supernatant after 48 hours standing still - Initial polymer (B) concentration)}/Initial PTFE concentration] x 100

Initial PTFE concentration: calculated from the solids concentration of the organosol composition used in the precipitation ratio test, and the composition ratio of the polytetrafluoroethylene particles (A) and the polymer (B) in the organosol composition used in the precipitation ratio test which is measured by solid state NMR.

Solids concentration of supernatant after 48 hours standing still: calculated as the ratio of the mass of the solids content to the mass of the aqueous dispersion or organosol. Here, the mass of the solids content is obtained by weighing the solids content of the supernatant collected after the still standing and heated at 150°C for about three hours.

Initial polymer (B) concentration: calculated from the solids concentration of the organosol composition used in the precipitation ratio test, and the composition ratio of the polytetrafluoroethylene particles (A) and the polymer (B) in the organosol composition used in the precipitation ratio test which is measured by solid state NMR.

[Table 1]

| | PTFE/THV (mass ratio) | Initial solids concentration (% by mass) | Solids concentration of supernatant (% by mass) | Precipitation ratio of PTFE (%) Precipitation. |
|---|---|---|---|---|
| Preparation Example 3 | 50/50 | 2 | 1.73 | 27 |
| | | 5 | 4.04 | 38 |

Preparation Example 4 (Preparation of NMP solution of binder polymer (I) for current collector)

An amount of 10 parts by mass of VDF (Kynar 761 produced by Arkema Inc.) and 90 parts by mass of NMP were stirred by a rotor in a sealed vessel, so that a 10% by mass NMP solution of PVDF was prepared.

Preparation Example 5 (Preparation of PTFE organosol composition (PTFE/THV = 60/40 [mass ratio])

A PTFE organosol composition (PTFE/THV = 60/40 at mass ratio) having a solids concentration of 25% by mass was produced by the same procedure as that for Preparation Example 3, except that dimethylacetamide was used as the organic solvent (C). The water concentration of the organosol measured by the Karl-Fischer method was not higher than 100 ppm. Also, the organosol was left to stand still and observed by eye. The organosol was stable even after 10 or more days.

Preparation Example 6 (Preparation of dimethylacetamide solution of binder polymer (I) for current collector)

An amount of 8 parts by mass of PVdF (KF polymer 7200 produced by KUREHA Chemical Industry Co., Ltd.) and 92 parts by mass of dimethylacetamide were stirred by a rotor in a sealed vessel, so that an 8% by mass dimethylacetamide solution of PVdF was prepared.

Preparation Example 7 (Preparation of aqueous dispersion of PTFE particles)

A 6-L SUS stainless steel polymerization vessel with a stirrer was charged with 3500 g of a solution obtained by dissolving an emulsifier $CF_3OCF(CF_3)CF_2OCF(CF_3)COONH_4$ in pure water to a concentration of 0.15% by mass, and 100 g of granular paraffin wax, and was then sealed. Under stirring at 265 rpm, the atmosphere in the vessel was evacuated/replaced with nitrogen for a few times, and then the system in the vessel was under a nitrogen pressure of 0.3 MPaG. Next, the internal temperature of the vessel was set to 85°C, and to the vessel was added 20 g of a solution containing 722 mg of disuccinic acid peroxide (DSP) under nitrogen pressure. An amount of 20 g of water was added again under nitrogen pressure to rinse the reaction pipe such that no solution was left in the pipe. Then, the stirring was maintained at 265 rpm and the internal temperature was maintained at 85°C. Two hours after the addition of DSP, the gas in the vessel was replaced with tetrafluoroethylene (TFE) until the pressure reached 0.7 MPaG. To the vessel, 16 mg of a solution obtained by dissolving ammonium persulfate (APS) in 20 g of pure water was added under nitrogen pressure. An amount of 20 g of water was added again under nitrogen pressure to rinse the reaction pipe such that no solution was left in the pipe. Additional TFE was then added to the vessel so that the internal pressure of the vessel was maintained at 0.8 MPa. The stirring was stopped when the amount of the additional monomer reached 1195 g, the gas in the vessel was blown away, and the reaction was terminated. The content of the vessel was cooled, and recovered in a plastic container, so that an aqueous dispersion of PTFE (hereinafter, "PTFE-2") particles was obtained. The solids concentration of the aqueous dispersion determined by a dry mass method was 31.0% by mass, and the average primary particle size of the particles in the aqueous dispersion was 0.23 μm.

In order to measure the standard specific gravity and the melting point, 500 ml of the obtained aqueous dispersion of PTFE-2 particles was diluted by deionized water until the solids concentration reached about 15% by mass. To the diluted aqueous dispersion was added 1 ml of nitric acid, and the dispersion was stirred vigorously until the dispersion was coagulated. The obtained coagulum was dried at 145°C for 18 hours, and thereby PTFE-2 powder was obtained. The standard specific gravity [SSG] of the obtained PTFE-2 powder was measured and found to be 2.199, and the melting point analyzed by DSC was 327.1°C.

Preparation Example 8 (Preparation of PTFE-2 organosol (PTFE-2/THV = 60/40 [mass ratio])

A 200-mL beaker was charged with 41.0 g of the aqueous dispersion of PTFE-2 particles obtained in Preparation Example 7, 41.0 g of the aqueous dispersion of THV particles obtained in Preparation Example 2, and 19 g of hexane. The mixture was stirred by a mechanical stirrer. An amount of 95 g of acetone was added while the mixture was stirred, and then stirring was performed for four minutes. After the stirring, the resulting coagulum and the supernatant mainly containing water were separated by filtration. The obtained hydrous coagulum was mixed with about 190 g of DMAC, and the mixture was stirred for 30 minutes. The mixture was then put in a 500-ml recovery flask, and the water was evaporated by an evaporator, so that 162 g of a PTFE-2 organosol was obtained in which PTFE particles were uniformly dispersed in DMAC. The measured solids concentration of this organosol was 12.0% by mass, and the water concentration measured by the Karl-Fischer method was not higher than 100 ppm. The mass ratio of PTFE-2/THV measured by solid state NMR was 60/40. Also, the organosol was left to stand still and observed by eye. The organosol showed no separated layers or particles even after 10 or more days.

Example 1 (Preparation of binder composition for electrode) Preparation of binder composition for electrode and formulation thereof

The 10% by mass NMP solution of PVdF prepared in Preparation Example 4 and the organosol of PTFE particles prepared in Preparation Example 3 were mixed in amounts according to each ratio (solids content ratio) shown in Table 2. The mixture was stirred by an unsteady speed stirrer at room temperature for 30 minutes, so that a binder composition for an electrode was prepared.
The dispersion storage stability of the obtained binder composition for an electrode was evaluated by the following method. As a result, the organosol composition of PTFE particles including THV was found to lead to stable dispersion of particles when mixed with the NMP solution of PVdF.
The binder composition for an electrode is put into a 50-ml sample bottle, and is left to stand still at room temperature for three days. Thereafter, the composition is observed by eye.
The evaluation criteria are described below.

++: Uniform dispersion was maintained.
+: Precipitation occurred, but uniform dispersion was recovered when the composition was stirred (at 60 rpm) again by a rotor for one hour.
-: Precipitation occurred, and the precipitation remained even when the composition was stirred (at 60 rpm) again by a rotor for one hour.

[Table 2]

| PTFE/PVdF(solids content ratio) | Dispersibility |
|---|---|
| 8/2 | + |
| 7/3 | ++ |
| 6/4 | ++ |
| 5/5 | ++ |
| 4/6 | ++ |
| 2/8 | ++ |
| 0/10 | ++ |

Example 2-1 (Lithium secondary cell)

(1) Preparation of positive electrode mixture slurry, and production of electrode

(Production of positive electrode 1)

The PTFE organosol prepared in Preparation Example 3 was used as the binder composition for an electrode. $LiNi_{1/3}Co_{1/3}Mn_{1/3}O_2$ (produced by Nippon Chemical Industrial Co., Ltd.) as a positive electrode active material, acetylene

black (produced by DENKI KAGAKU KOGYO K.K.), and the binder composition for an electrode were mixed at a solids mass ratio (positive electrode active material/acetylene black/binder composition) of 94/3/3. To the mixture was added NMP until the solids concentration was 65% by mass. The mixture was stirred by a double-arm kneader, and thereby a positive electrode mixture slurry was prepared.

The positive electrode mixture slurry was applied to a 15-μm-thick aluminum foil and then dried, so that a coating layer having a thickness of about 80 μm was obtained. The coating layer was pressed (rolled) to give an overall thickness of 60 μm, and was then cut into a predetermined size (300 mm x 100 mm). Thereafter, the cut piece was heated by a vacuum dryer at 120°C for eight hours, whereby a sheet-shaped positive electrode 1 (present invention) was produced.

Comparative Example 1

(Production of positive electrode 2)

A positive electrode 2 (for comparison) was produced by the same procedure as that for production of the positive electrode 1, except that the binder composition for an electrode used here was one prepared only from the 10% by mass NMP solution of PVdF prepared in Preparation Example 4 without any organosol.

Example 2-2

(Production of positive electrode 3)

A positive electrode 3 (present invention) was produced by the same procedure as that for production of the positive electrode 1, except that the positive electrode active material used for the positive electrode mixture slurry was $LiNi_{0.82}Co_{0.15}Al_{0.3}O_2$ (produced by Toda Kogyo Corp.).

Comparative Example 2

(Production of positive electrode 4)

A positive electrode 4 (for comparison) was produced by the same procedure as that for production of the positive electrode 2, except that the positive electrode active material used for the positive electrode mixture slurry was $LiNi_{0.82}Co_{0.15}Al_{0.3}O_2$ (produced by Toda Kogyo Corp.).

Example 2-3

(2) Preparation of negative electrode mixture slurry, and production of electrode

(Production of negative electrode 1)

The PTFE organosol prepared in Preparation Example 3 was used as the binder composition for an electrode. An amount of 94% by mass of artificial graphite powder and 6% by mass of the PTFE organosol prepared in Preparation Example 3 were mixed. Here, the amounts were based on the solids content. To the mixture was added NMP until the solids concentration was 60% by mass. The mixture was stirred by a double-arm kneader, and thereby a negative electrode mixture slurry was prepared.

The negative electrode mixture slurry was applied to a 10-μm-thick copper foil and then dried, so that a coating layer having a thickness of about 80 μm was obtained. The coating layer was pressed (rolled) to give an overall thickness of 70 μm, and was then cut into a predetermined size (300 mm x 100 mm). Thereafter, the cut piece was heated by a hot air dryer at 120°C for four hours, whereby a negative electrode 1 (present invention) was produced.

Comparative Example 3

(Production of negative electrode 2)

An amount of 94% by mass of artificial graphite powder and 6% by mass of the NMP solution of PVdF prepared in Preparation Example 4 were mixed. Here, the amounts were based on the solids content. To the mixture was added NMP until the solids concentration was 53% by mass. The mixture was stirred by a double-arm kneader, and thereby a negative electrode mixture slurry was prepared.

The negative electrode mixture slurry was applied to a 10-μm-thick copper foil and then dried, so that a coating layer having a thickness of about 80 μm was obtained. The coating layer was pressed (rolled) to give an overall thickness of 70 μm, and was then cut into a predetermined size (300 mm x 100 mm). Thereafter, the cut piece was heated by a hot air dryer at 120°C for four hours, whereby a negative electrode 2 (for comparison) was produced.

Example 2-4

(Production of negative electrode 3)

The PTFE organosol prepared in Preparation Example 3 was used as the binder composition for an electrode. An amount of 40% by mass of silica particles, 51% by mass of artificial graphite powder, 3% by mass of acetylene black, and 6% by mass of the PTFE organosol prepared in Preparation Example 3 were mixed. Here, the amounts were based on the solids content. To the mixture was added NMP until the solids concentration was 60% by mass. The mixture was stirred by a double-arm kneader, and thereby a negative electrode mixture slurry was prepared.

The negative electrode mixture slurry was applied to a 10-μm-thick copper foil and then dried, so that a coating layer having a thickness of about 80 μm was obtained. The coating layer was pressed (rolled) to give an overall thickness of 70 μm, and was then cut into a predetermined size (300 mm x 100 mm). Thereafter, the cut piece was heated by a hot air dryer at 120°C for four hours, whereby a negative electrode 3 (present invention) was produced.

Comparative Example 4

(Production of negative electrode 4)

An amount of 40% by mass of silica particles, 51% by mass of artificial graphite powder, 3% by mass of acetylene black, and 6% by mass of the NMP solution of PVdF prepared in Preparation Example 4 were mixed. Here, the amounts were based on the solids content. To the mixture was added NMP until the solids concentration was 60% by mass. The mixture was stirred by a double-arm kneader, and thereby a negative electrode mixture slurry was prepared.

The negative electrode mixture slurry was applied to a 10-μm-thick copper foil and then dried, so that a coating layer having a thickness of about 80 μm was obtained. The coating layer was pressed (rolled) to give an overall thickness of 70 μm, and was then cut into a predetermined size (300 mm x 100 mm). Thereafter, the cut piece was heated by a hot air dryer at 120°C for four hours, whereby a negative electrode 4 (for comparison) was produced.

Test 2 (evaluation of flexibility: winding test)

Each of the sheet-shaped positive electrodes and the negative electrodes shown in Table 3 was wound around a 2-mm diameter cylinder, and then spread out to visually check whether or not cracks occur on the coating layer of the positive electrode or the negative electrode. Table 3 shows the results. The electrode was evaluated as "+" if no crack occurred, and the electrode was evaluated as "-" if a crack occurred.

Test 3 (Battery characteristics)

(Production of laminated cell)

Each of the positive electrodes shown in Table 4 was cut into a size of 40 mm x 72 mm (with a 10 mm x 10 mm positive electrode terminal), and each of the negative electrodes shown in Table 4 was cut into a size of 42 mm x 74 mm (with a 10 mm x 10 mm negative electrode terminal), and a lead was welded to each of the terminals. A 20-μm-thick microporous polyethylene film was cut into a size of 78 mm x 46 mm to prepare a separator. The separator was disposed between the positive electrode and the negative electrode. The resulting assembly was put in an aluminum laminated casing. Subsequently, 2 ml of an electrolyte was put into each casing, and the casing was sealed, whereby a laminated cell having a capacity of 72 mAh was produced. The electrolyte used was an ethylene carbonate/diethyl carbonate (= 30/70 (volume ratio)) solution (concentration: 1.0 mol/L) with an electrolyte salt of $LiPF_6$.

The cycle characteristic (capacity retention) of the lithium secondary cell was evaluated in the following way. Table 4 shows the results.

(Cycle characteristic)

The cycle characteristic was determined under the following charge and discharge measurement conditions, provided that 1 C is taken as 72 mA when the charge and discharge currents are represented by C.

Charge and discharge conditions

Charge: Maintain 0.5 C and 4.2 V until the charge current reaches 1/10 C (CC/CV charge)

Discharge: 1 C, 2.5 V cut-off (CC discharge)

Temperature condition: 50°C

To evaluate the cycle characteristic, a charge and discharge test is performed under the above charge and discharge conditions, and the discharge capacity after 100 cycles is measured. The cycle characteristic is represented by a capacity retention, a value calculated from the following formula.

$$\text{Capacity retention (\%)} = \text{100-cycle discharge capacity (mAh)} / \text{1-cycle discharge capacity (mAh)} \times 100$$

[Table 3]

| | | Binder | Active **material** | Cracks |
|---|---|---|---|---|
| Positive electrode 1 | Example 2-1 | PTFE/THV | $LiNi_{1/3}Co_{1/3}Mn_{1/3}O_2$ | + |
| Positive electrode 2 | Comparative Example 1 | PVdF | $LiNi_{1/3}Co_{1/3}Mn_{1/3}O_2$ | - |
| Positive electrode 3 | Example 2-2 | PTFE/THV | $LiNi_{0.82}Co_{0.15}Al_{0.3}O_2$ | + |
| Positive electrode 4 | Comparative Example 2 | PVdF | $LiNi_{0.82}Co_{0.15}Al_{0.3}O2$ | - |
| Negative electrode 1 | Example 2-3 | PTFE/THV | Artificial graphite | + |
| Negative electrode 2 | Comparative Example 3 | PVdF | Artificial graphite | - |
| Negative electrode 3 | Example 2-4 | PTFE/THV | Silica particles/artificial graphite (40/54) | + |
| Negative electrode 4 | Comparative Example 4 | PVdF | Silica particles/artificial graphite (40/54) | - |

[Table 4]

| Combination of electrodes | | Cycle characteristic (%) |
|---|---|---|
| Positive electrode No. | Negative electrode No. | |
| 1 | 1 | 93.5 |
| 2 | 1 | 92.0 |
| 1 | 2 | 92.5 |
| 2 | 2 | 89.5 |
| 3 | 1 | 94.3 |
| 4 | 1 | 91.8 |
| 3 | 2 | 93.2 |
| 4 | 2 | 89.8 |
| 1 | 3 | 87.6 |
| 2 | 3 | 84.8 |
| 1 | 4 | 86.2 |

(continued)

| Combination of electrodes | | Cycle characteristic (%) |
|---|---|---|
| Positive electrode No. | Negative electrode No. | |
| 2 | 4 | 82.3 |
| 3 | 3 | 88.5 |
| 4 | 3 | 85.4 |
| 3 | 4 | 86.8 |
| 4 | 4 | 82.8 |

The results in Table 3 show that the positive electrodes and the negative electrodes produced from the binder composition for an electrode according to the present invention are very flexible. Further, the results in Table 4 show that the cycle characteristic is improvedmost when both the positive electrode and negative electrode are produced from the binder composition for an electrode according to the present invention which contains PTFE/THV. This is probably because cycle degradation caused by insufficient current collection during the cycle test did not occur because the electrodes had low swelling properties.

Example 3-1 (Electric double layer capacitor)

(Production of electrode 1)

An amount of 8 parts by mass of the 8% by mass dimethylacetamide solution of PVdF prepared in Preparation Example 6 and 2 parts by mass of the organosol of PTFE particles prepared in Preparation Example 5 were mixed. The mixture was stirred by an unsteady speed stirrer at room temperature for 30 minutes, and thereby a binder composition for an electrode was prepared. The total mass of the TFE polymerized unit contained in all the polymers was 22% by mass of the total mass of all the polymers.

An amount of 8 parts by mass of the obtained binder composition for an electrode, 100 parts by mass of activated carbon (item number: RP20, surface area: 1700 $m^2/g$) produced by Kuraray Chemical Co., Ltd., 3 parts by mass of Denka Black (conductive assistant) produced by DENKI KAGAKU KOGYO K.K., and 12 parts by mass of ketjen black produced by Lion Corporation were mixed. Thereby, an electrode mixture slurry was obtained.

Etched aluminum (item number: 20CB, thickness: about 20 μm) produced by Japan Capacitor Industrial Co., Ltd. was used as a current collector. Next, both faces of the etched aluminum as a current collector were coated with a conductive coating material of Varniphite (item number: T602) produced by Nippon Graphite Industries, Ltd. to a coating thickness of 7 μm by a coater, whereby conductive-layer double-coated etched aluminum was produced.

Both faces of the conductive-layer double-coated etched aluminum were coated with the electrode mixture slurry (positive electrode: 103 μm, negative electrode: 80 μm) by a coater, so that electrode mixture (activated carbon) layers were formed. Thereby, an electrode 1 (present invention) was produced. The density of the obtained electrode mixture layer was 0.52 $g/cm^3$. Note that a current collector, a conductive layer, and an electrode mixture layer are collectively referred to as an electrode hereinbelow.

Comparative Example 5

(Production of electrode 2)

An electrode 2 (for comparison) was produced by the same procedure as that for production of the electrode 1, except that the binder composition for an electrode was changed to one prepared from only the 8% by mass dimethylacetamide solution of PVdF prepared in Preparation Example 6 without any organosol . The total mass of the TFE polymerized unit contained in all the polymers was 0% by mass of the total mass of all the polymers.

The electrodes 1 and 2 were subjected to the following bending test.

(Bending test)

The test is conducted using a bending tester (paint film bending tester produced by Yasuda Seiki Seisakusho Ltd.) with ϕ2, in accordance with JIS K 5400. The evaluation criterion is whether or not any cracks are seen on the electrode surface when the surface is observed under magnification with a loupe.

As a result of the bending test, the electrode 1 of the present invention did not have any cracks on the surface, but the electrode 2 of Comparative Example 5 had cracks on the surface.

Example 3-2

(Production of ϕ18 wound type)

The above electrode 1 was cut to a 30-mm width, and the obtained electrodes and TF45-30 (separator) produced by Nippon Kodoshi Corporation, cut to a 34-mm width, were wound together by a winding machine for EDLC. At that time, an electrode lead tab was attached to the electrode by crimping. Thereby, a cylindrical wound type having a diameter of 16 mm was produced.
Wound types of different diameter sizes can be produced similarly. For example, in the case of producing a ϕ35 wound type, the above electrode 1 was cut to a 55-mm width, and the obtained electrodes and TF 45-30 (separator) produced by Nippon Kodoshi Corporation, cut to a 62-mm width, were wound together by a winding machine for EDLC. At that time, an electrode lead tab was attached to the electrode by crimping. Thereby, a cylindrical wound type having a diameter of 32 mm was produced. Here, a gas-transmission safety valve was attached to the sealing plate according to need.

(Production of laminated cell)

The above electrode 1 was cut into a predetermined, size (20 x 72 mm), and an electrode lead was welded to the aluminum face of the current collector. The resulting electrodes 1 with a separator placed therebetween were put in a laminated container (item number: D-EL 40H, produced by Dai Nippon Printing Co., Ltd.). An electrolyte was poured into the container in a dry chamber for electrolyte impregnation. The container was sealed, and thereby a laminated cell was produced. The separator used was the above-mentioned one.

(Preparation of electrolyte 1)

Sulfolane, $HCF_2CF_2CH_2OCF_2CF_2H$, and dimethyl carbonate were mixed at a volume ratio of 65/15/20, so that a solvent for dissolving an electrolyte salt was prepared. To the solvent was added triethylmethylammonium tetrafluoroborate (TEMA $\cdot BF_4$) to a concentration of 1.2 mol/L. TEMA $\cdot BF_4$ dissolved uniformly.

(Preparation of electrolyte 2)

Propionitrile, sulfolane, and $HCF_2CF_2CH_2OCF_2CF_2H$ were mixed at a volume ratio of 70/10/20, so that a solvent for dissolving an electrolyte salt was prepared. To the solvent was added triethylmethylammonium tetrafluoroborate (TEMA $\cdot BF_4$) to a concentration of 1.2 mol/L. TEMA $\cdot BF_4$ dissolved uniformly.

(Preparation of electrolyte 3)

Acetonitrile and $HCF_2CF_2CH_2OCF_2CF_2H$ were mixed at a volume ratio of 80/20, so that a solvent for dissolving an electrolyte salt was prepared. To the solvent was added triethylmethylammonium tetrafluoroborate (TEMA$\cdot BF_4$) to a concentration of 1.2 mol/L. TEMA$\cdot BF_4$ dissolved uniformly.

(Preparation of electrolyte 4)

Acetonitrile was used as the solvent for dissolving an electrolyte salt. To the solvent was added tetraethylammonium tetrafluoroborate (TEA)$BF_4$ to a concentration of 1.0 mol/L. (TER)$BF_4$ dissolved uniformly.

Using a combination of the electrodes 1 and the electrolyte 3 or a combination of the electrodes 1 and the electrolyte 4, the ϕ18 wound electric double layer capacitor and the laminated electric double layer capacitor were subjected to various tests. Tables 5 and 6 show the results.
The electric double layer capacitor of the present invention was subjected to a durability test (float test) with an applied voltage of 3.0 V at an evaluation temperature of 60°C. The results showed that the capacitor had an internal resistance twice the initial value or lower and a capacitance change within ±30% of the initial value, showed an acceptable level of expansion of the exterior casing, and thus had durability, even after 500 hours.

(Evaluation of capacitor characteristics)

The obtained electric double layer capacitor was tested for the long-term reliability (capacitance retention, internal resistance increase rate, expansion).

$$\text{Capacitance retention (\%)} = \frac{\text{Capacitance after a predetermined time period}}{\text{Capacitance before evaluation (initial value)}} \times 100$$

$$\text{Internal resistance increase rate} = \frac{\text{Internal resistance after a predetermined time period}}{\text{Internal resistance before evaluation (initial value)}}$$

If a capacitor has a capacitance retention after 500 hours of 70% or higher and an internal resistance increase rate twice the initial value or lower, then the capacitor is considered to have excellent load characteristics at 60°C, excellent cycle characteristics and rate characteristics for use at room temperature, and thus have long-term reliability.

Measurement of expansion

The height of the casing of the wound cell before the long-term reliability test was measured, and then the height increase due to expansion was determined relative to that value. The initial height was 41±0.2 mm. In the case of the laminated cell, the thickness of the cell was measured, and then the thickness increase due to expansion was determined relative to that value. The initial thickness was 0.58±0.02 mm.

[Table 5]

| (Wound cell capacitor) | | | | |
|---|---|---|---|---|
| | | 0 hours (initial value) | 291 hours | 500 hours |
| Electrolyte 3 | Capacitance (F) | 59 | 52 | 50 |
| | Capacitance retention (%) | 100 | 88 | 84 |
| | Internal resistance (mQ) | 14 | 19 | 20 |
| | Internal resistance increase rate | 1.0 | 1.4 | 1.5 |
| | Cell height (mm) | 41.1 | 42.0 | 42.6 |
| | Expansion (mm) | 0 | 0.9 | 1.5 |
| Electrolyte 4 | Capacitance (F) | 59 | 55 | 52 |
| | Capacitance retention (%) | 100 | 93 | 88 |
| | Internal resistance (mΩ) | 14 | 14 | 15 |
| | Internal resistance increase rate | 1.0 | 1.0 | 1.1 |
| | Cell height (mm) | 41.3 | 43.0 | 44.0 |
| | Expansion (mm) | 0 | 1.7 | 2.7 |

[Table 6]

| (Laminated capacitor) | | | | | |
|---|---|---|---|---|---|
| | | 0 hours (initial value) | 294 hours | 356 hours | 500 hours |
| Electrolyte 3 | Capacitance (F) | 3.9 | 3.6 | 3.5 | 3.4 |
| | Capacitance retention (%) | 100 | 92 | 89 | 88 |
| | Internal resistance (mΩ) | 140 | 140 | 154 | 168 |
| | Internal resistance increase rate | 1.0 | 1.0 | 1.1 | 1.2 |
| | Cell thickness (mm) | 0.5800 | 0.5806 | 0.5874 | 0.5890 |
| | Expansion (mm) | 0 | 0.0006 | 0.0074 | 0.0090 |
| Electrolyte 4 | Capacitance (F) | 3.9 | 3.6 | 3.5 | 3.4 |
| | Capacitance retention (%) | 100 | 93 | 89 | 88 |
| | Intenal resistance (mΩ) | 140 | 145 | 147 | 154 |
| | Internal resistance increase rate | 1.0 | 1.0 | 1.0 | 1.1 |
| | Cell thickness (mm) | 0.5800 | 0.5811 | 0.5944 | 0.598 |
| | Expansion (mm) | 0 | 0.0011 | 0.0144 | 0.0180 |

Using a combination of the electrode 1 and the electrolyte 2 or a combination of the electrode 1 and the electrolyte 1, the laminated electric double layer capacitor was subjected to various tests. Table 7 shows the results. The electric double layer capacitor of the present invention was subjected to a durability test (float test) with an applied voltage of 3.0 V at an evaluation temperature of 70°C. The results showed that the capacitor had an internal resistance twice the initial value or lower and a capacitance change within ±30% of the initial value, showed an acceptable level of expansion of the exterior casing, and thus had durability, even after 500 hours.

[Table 7]

| (Laminated capacitor) | | | | | |
|---|---|---|---|---|---|
| | | 0 hours (initial value) | 294 hours 294 hours | 356 hours | 500 hours |
| Electrolyte 1 | Capacitance (F) | 3.9 | 3.2 | 3.2 | 3.1 |
| | Capacitance retention (%) | 100 | 81 | 81 | 79 |
| | Internal resistance (mΩ) | 606 | 727 | 790 | 910 |
| | Internal resistance increase rate | 1.0 | 1.2 | 1.3 | 1.5 |
| | Cell thickness (mm) | 0.5800 | 0.5805 | 0.5808 | 0.5815 |
| | Expansion (mm) | 0.0000 | 0.005 | 0.008 | 0.015 |
| Electrolyte 2 | Capacitance (F) | 3.9 | 3.7 | 3.5 | 3.4 |
| | Capacitance retention (%) | 100 | 94 | 89 | 88 |
| | Internal resistance (mΩ) | 230 | 240 | 253 | 276 |
| | Internal resistance increase rate | 1.0 | 1.0 | 1.1 | 1.2 |
| | Cell thickness (mm) | 0.5800 | 0.5800 | 0.6144 | 0.6200 |
| | Expansion (mm) | 0.0000 | 0.0000 | 0.0344 | 0.0400 |

Example 4-1 (Preparation of binder composition for electrode)

An amount of 8 parts by mass of the 8% by mass dimethylacetamide solution of PVdF prepared in Preparation Example 6 and 2 parts by mass of the organosol of PTFE particles prepared in Preparation Example 5 were mixed. The mixture was stirred by an unsteady speed stirrer at room temperature for 30 minutes, and thereby a binder composition for an electrode was prepared. The total mass of the TFE polymerized unit contained in all the polymers was 22% by mass of the total mass of all the polymers.

Example 4-2 (Production of electrode 3)

An amount of 8 parts by mass of the binder composition for an electrode obtained in Example 4-1, 100 parts by mass of activated carbon (item number: YP50F, surface area: 1700 $m^2/g$) produced by Kuraray Chemical Co., Ltd., 3 parts by mass of Denka Black (conductive assistant) produced by DENKI KAGAKU KOGYO K.K., and 12 parts by mass of ketjen black produced by Lion Corporation were mixed. Thereby, an electrode mixture slurry was obtained.
Etched aluminum (item number: 20CB, thickness: about 20 $\mu m$) produced by Japan Capacitor Industrial Co., Ltd. was used as a current collector. Next, both faces of the etched aluminum as a current collector were coated with a conductive coating material of Varniphite (item number: T602) produced by Nippon Graphite Industries, Ltd. to a coating thickness of 7 $\mu m$ by a coater, whereby conductive-layer double-coated etched aluminum was produced.
Both faces of the conductive-layer double-coated etched aluminum were coated with the electrode mixture slurry (positive electrode: 103 $\mu m$, negative electrode: 80 $\mu m$) by a coater, so that electrode mixture (activated carbon) layers were formed. Thereby, an electrode 3 (present invention) was produced. The density of the obtained electrode mixture layer was 0.52 $g/cm^3$.

Comparative Example 6

(Production of electrode 4)

An electrode 4 (for comparison) was produced by the same procedure as that for production of the electrode 3, except that the binder composition for an electrode was changed to one prepared from only the 8% by mass dimethylacetamide solution of PVdF prepared in Preparation Example 6 without any organosol. The total mass of the TFE polymerized unit contained in all the polymers was 0% by mass of the total mass of all the polymers.
The electrodes 3 and 4 were subjected to the following bending test.

(Bending test)

The test is conducted using a bending tester (paint film bending tester produced by Yasuda Seiki Seisakusho Ltd.) with $\phi 2$, in accordance with JIS K 5400. The evaluation criterion is whether or not any cracks are seen on the electrode surface when the surface is observed under magnification with a loupe.
As a result of the bending test, the electrode 3 of the present invention did not have any cracks on the surface, but the electrode 4 of Comparative Example 6 had cracks on the surface.

Example 4-3 (Production of laminated cell)

The above electrode 3 was cut into a predetermined size (20 x 72 mm), and an electrode lead was welded to the aluminum face of the current collector. The resulting electrodes 3 with a separator placed therebetween were put in a laminated container (item number: D-EL 40H, produced by Dai Nippon Printing Co., Ltd.). An electrolyte was poured into the container in a dry chamber for electrolyte impregnation. The container was sealed, and thereby a laminated cell was produced. The separator used was the above-mentioned one.

(Preparation of electrolyte 3)

Acetonitrile and $HCF_2CF_2CH_2OCF_2CF_2H$ were mixed at a volume ratio of 80/20, so that a solvent for dissolving an electrolyte salt was prepared. To the solvent was added triethylmethylammonium tetrafluoroborate ($TEMA \cdot BF_4$) to a concentration of 1.2 mol/L. $TEMA \cdot BF_4$ dissolved uniformly.

(Preparation of electrolyte 4)

Acetonitrile was used as the solvent for dissolving an electrolyte salt. To the solvent was added tetraethylam-

monium tetrafluoroborate $(TEA)BF_4$ to a concentration of 1.0 mol/L. $(TEA)BF_4$ dissolved uniformly.

Using a combination of the electrodes 3 and the electrolyte 3 or a combination of the electrodes 3 and the electrolyte 4, the laminated electric double layer capacitor was subjected to various tests. Table 8 shows the results. The electric double layer capacitor of the present invention was subjected to a durability test (float test) with an applied voltage of 3.0 V at an evaluation temperature of 60°C. The results showed that the capacitor had an internal resistance twice the initial value or lower and a capacitance change within ±30% of the initial value, showed an acceptable level of expansion of the exterior casing, and thus had durability, even after 500 hours.

(Evaluation of capacitor characteristics)

The obtained electric double layer capacitor was tested for the long-term reliability (capacitance retention, internal resistance increase rate, expansion).

$$\text{Capacitance retention (\%)} = \frac{\text{Capacitance after a predetermined time period}}{\text{Capacitance before evaluation (initial value)}} \times 100$$

$$\text{Internal resistance increase rate} = \frac{\text{Internal resistance after a predetermined time period}}{\text{Internal resistance before evaluation (initial value)}}$$

If a capacitor has a capacitance retention after 500 hours of 70% or higher and an internal resistance increase rate twice the initial value or lower, then the capacitor is considered to have excellent load characteristics at 60°C, excellent cycle characteristics and rate characteristics for use at room temperature, and thus have long-term reliability.

Measurement of expansion

In the case of the laminated cell, the thickness of the cell was measured, and then the thickness increase due to expansion was determined relative to that value. The initial thickness was 0.58±0.02 mm.

[Table 8]

| (Laminated capacitor) | | | | | |
|---|---|---|---|---|---|
| | | 0 hours (initial value) | 294 hours | 356 hours | 500 hours |
| Electrolyte 3 | Capacitance (F) | 3.9 | 3.5 | 3.5 | 3.5 |
| | Capacitance retention (%) | 100 | 91 | 90 | 89 |
| | Internal resistance (mΩ) | 140 | 140 | 154 | 168 |
| | Internal resistance increase rate | 1.0 | 1.0 | 1.1 | 1.2 |
| | Cell thickness (mm) | 0.5800 | 0.5808 | 0.5854 | 0.5872 |
| | Expansion (mm) | 0 | 0.0008 | 0.0054 | 0.0072 |
| Electrolyte 4 | Capacitance (F) | 3.9 | 3.6 | 3.5 | 3.4 |
| | Capacitance retention (%) | 100 | 93 | 89 | 88 |
| | Internal resistance (mΩ) | 140 | 145 | 147 | 154 |
| | Internal resistance increase rate | 1.0 | 1.0 | 1.0 | 1.1 |
| | Cell thickness (mm) | 0.5800 | 0.5818 | 0.5957 | 0.599 |
| | Expansion (mm) | 0 | 0.0018 | 0.0157 | 0.019 |

Example 5-1 (Electric double layer capacitor)

(Production of electrode 5)

An amount of 8 parts by mass of the 8% by mass dimethylacetamide solution of PVdF prepared in Preparation Example 6 and 2 parts by mass of the organosol of PTFE particles prepared in Preparation Example 8 were mixed. The mixture was stirred by an unsteady speed stirrer at room temperature for 30 minutes, and thereby a binder composition for an electrode was prepared. The total mass of the TFE polymerized unit contained in all the polymers was 22% by mass of the total mass of all the polymers.

An amount of 8 parts by mass of the obtained binder composition for an electrode, 100 parts by mass of activated carbon (item number: RP20, surface area: 1700 $m^2/g$) produced by Kuraray Chemical Co., Ltd., 3 parts by mass of Denka Black (conductive assistant) produced by DENKI KAGAKU KOGYO K.K., and 12 parts by mass of ketjen black produced by Lion Corporation were mixed. Thereby, an electrode mixture slurry was obtained.

Etched aluminum (item number: 20CB, thickness: about 20 $\mu$m) produced by Japan Capacitor Industrial Co., Ltd. was used as a current collector. Next, both faces of the etched aluminum as a current collector were coated with a conductive coating material of Varniphite (item number: T602) produced by Nippon Graphite Industries, Ltd. to a coating thickness of 7 $\mu$m by a coater, whereby conductive-layer double-coated etched aluminum was produced.

Both faces of the conductive-layer double-coated etched aluminum were coated with the electrode mixture slurry (positive electrode: 103 $\mu$m, negative electrode: 80 $\mu$m) by a coater, so that electrode mixture (activated carbon) layers were formed. Thereby, an electrode 5 (present invention) was produced. The density of the obtained electrode mixture layer was 0.52 $g/cm^3$.

Comparative Example 7 (Production of electrode 6)

An electrode 6 (for comparison) was produced by the same procedure as that for production of the electrode 5, except that the binder composition for an electrode was changed to one prepared from only the 8% by mass dimethylacetamide solution of PVdF prepared in Preparation Example 6 without any organosol. The total mass of the TFE polymerized unit contained in all the polymers was 0% by mass of the total mass of all the polymers.

The electrodes 5 and 6 were subjected to the following bending test.

(Bending test)

The test is conducted using a bending tester (paint film bending tester produced by Yasuda Seiki Seisakusho Ltd.) with $\phi$2, in accordance with JIS K 5400. The evaluation criterion is whether or not any cracks are seen on the electrode surface when the surface is observed under magnification with a loupe.

As a result of the bending test, the electrode 5 of the present invention did not have any cracks on the surface, but the electrode 6 of Comparative Example 7 had cracks on the surface.

Example 5-2

(Production of laminated cell)

The above electrode 5 was cut into a predetermined size (20 x 72 mm), and an electrode lead was welded to the aluminum face of the current collector. The resulting electrodes 5 with a separator placed therebetween was put in a laminated container (item number: D-EL 40H, produced by Dai Nippon Printing Co., Ltd.). An electrolyte was poured into the container in a dry chamber for electrolyte impregnation. The container was sealed, and thereby a laminated cell was produced. The separator used was the above-mentioned one.

(Preparation of electrolyte 3)

Acetonitrile and $HCF_2CF_2CH_2OCF_2CF_2H$ were mixed at a volume ratio of 80/20, so that a solvent for dissolving an electrolyte salt was prepared. To the solvent was added triethylmethylammonium tetrafluoroborate ($TEMA{\cdot}BF_4$) to a concentration of 1.2 mol/L. $TEMA{\cdot}BF_4$ dissolved uniformly.

The laminated electric double layer capacitor containing the electrodes 5 and the electrolyte 3 was subjected to various tests. Table 9 shows the results.
The electric double layer capacitor of the present invention was subjected to a durability test (float test) with an applied voltage of 3.0 V at an evaluation temperature of 60°C. The results showed that the capacitor had an internal resistance twice the initial value or lower and a capacitance change within $\pm$30% of the initial value, showed an acceptable level

of expansion of the exterior casing, and thus had durability, even after 500 hours.

(Evaluation of capacitor characteristics)

The obtained electric double layer capacitor was tested for the long-term reliability (capacitance retention, internal resistance increase rate, expansion).
$$\text{Capacitance retention (\%)} = \frac{\text{Capacitance after a predetermined time period}}{\text{Capacitance before evaluation (initial value)}} \times 100$$

$$\text{Internal resistance increase rate} = \frac{\text{Internal resistance after a predetermined time period}}{\text{Internal resistance before evaluation (initial value)}}$$

If a capacitor has a capacitance retention after 500 hours of 70% or higher and an internal resistance increase rate twice the initial value or lower, then the capacitor is considered to have excellent load characteristics at 60°C, excellent cycle characteristics and rate characteristics for use at room temperature, and thus have long-term reliability.

Measurement of expansion

In the case of the laminated cell, the thickness of the cell was measured, and then the thickness increase due to expansion was determined relative to that value. The initial thickness was 0.56±0.02 mm.
[Table 9]

| (Laminated capacitor) | | | | | |
|---|---|---|---|---|---|
| | | 0 hours (initial value) | 294 hours 294 | 356 hours | 500 hours |
| Electrolyte 3 | Capacitance (F) | 3.9 | 3.6 | 3.5 | 3.4 |
| | Capacitance retention (%) | 100 | 92 | 89 | 88 |
| | Internal resistance (mΩ) | 115 | 120 | 127 | 138 |
| | Internal resistance increase rate | 1.0 | 1.0 | 1.1 | 1.2 |
| | Cell thickness (mm) | 0.5800 | 0.5807 | 0.5856 | 0.5887 |
| | Expansion (mm) | 0 | 0.0007 | 0.0056 | 0.0087 |

Example 6-1 (Preparation of binder composition for electrode)

An amount of 8 parts by mass of the 8% by mass dimethylacetamide solution of PVdF prepared in Preparation Example 6 and 2 parts by mass of the organosol of PTFE particles prepared in Preparation Example 8 were mixed. The mixture was stirred by an unsteady speed stirrer at room temperature for 30 minutes, and thereby a binder composition for an electrode was prepared. The total mass of the TFE polymerized unit contained in all the polymers was 22% by mass of the total mass of all the polymers.

Example 6-2 (Production of electrode 7)

An amount of 8 parts by mass of the obtained binder composition for an electrode, 100 parts by mass of activated carbon (item number: YP50F, surface area: 1700 $m^2/g$) produced by Kuraray Chemical Co., Ltd., 3 parts by mass of Denka Black (conductive assistant) produced by DENKI KAGAKU KOGYO K.K., and 12 parts by mass of ketjen black produced by Lion Corporation were mixed. Thereby, an electrode mixture slurry was obtained.

Etched aluminum (item number: 20CB, thickness: about 20 μm) produced by Japan Capacitor Industrial Co., Ltd. was used as a current collector. Next, both faces of the etched aluminum as a current collector were coated with a conductive coating material of Varniphite (item number: T602) produced by Nippon Graphite Industries, Ltd. to a coating thickness of 7 μm by a coater, whereby conductive-layer double-coated etched aluminum was produced.

Both faces of the conductive-layer double-coated etched aluminum were coated with the electrode mixture slurry (positive electrode: 103 μm, negative electrode: 80 μm) by a coater, so that electrode mixture (activated carbon) layers were formed. Thereby, an electrode 7 (present invention) was produced. The density of the obtained electrode mixture layer wars 0.52 g/cm$^3$.

Comparative Example 8 (Production of electrode 8)

An electrode 8 (for comparison) was produced by the same procedure as that for production of the electrode 7, except that the binder composition for an electrode used here was one prepared only from the 8% by mass dimethylacetamide solution of PVdF prepared in Preparation Example 6 without any organosol. The total mass of the TFE polymerized unit contained in all the polymers was 0% by mass of the total mass of all the polymers.
The electrodes 7 and 8 were subjected to the following bending test.

(Bending test)

The test is conducted using a bending tester (paint film bending tester produced by Yasuda Seiki Seisakusho Ltd.) with ϕ2, in accordance with JIS K 5400. The evaluation criterion is whether or not any cracks are seen on the electrode surface when the surface is observed under magnification with a loupe.
As a result of the bending test, the electrode 7 of the present invention did not have any cracks on the surface, but the electrode 8 of Comparative Example 8 had cracks on the surface.

(Preparation of electrolyte 3)

Acetonitrile and $HCF_2CF_2CH_2OCF_2CF_2H$ were mixed at a volume ratio of 80/20, so that a solvent for dissolving an electrolyte salt was prepared. To the solvent was added triethylmethylammonium tetrafluoroborate (TEMA·$BF_4$) to a concentration of 1.2 mol/L. TEMA·$BF_4$ dissolved uniformly.

Example 6-3 (Production of laminated cell)

The above electrode 7 was cut into a predetermined size (20 x 72 mm), and an electrode lead was welded to the aluminum face of the current collector. The resulting electrodes 7 with a separator placed therebetween were put in a laminated container (item number: D-EL 40H, produced by Dai Nippon Printing Co., Ltd.). An electrolyte was poured into the container in a dry chamber for electrolyte impregnation. The container was sealed, and thereby a laminated cell was produced. The separator used was the above-mentioned one.
The laminated electric double layer capacitor produced from the electrodes 7 and the electrolyte 3 was subjected to various tests. Table 10 shows the results.
The electric double layer capacitor of the present invention was subjected to a durability test (float test) with an applied voltage of 3.0 V at an evaluation temperature of 60°C. The results showed that the capacitor had an internal resistance twice the initial value or lower and a capacitance change within ±30% of the initial value, showed an acceptable level of expansion of the exterior casing, and thus had durability, even after 500 hours.

(Evaluation of capacitor characteristics)

The obtained electric double layer capacitor was tested for the long-term reliability (capacitance retention, internal resistance increase rate, expansion).
$$\text{Capacitance retention (\%)} = \frac{\text{Capacitance after a predetermined time period}}{\text{Capacitance before evaluation (initial value)}} \times 100$$

$$\text{Internal resistance increase rate} = \frac{\text{Internal resistance after a predetermined time period}}{\text{Internal resistance before evaluation (initial value)}}$$

If a capacitor has a capacitance retention after 500 hours of 70% or higher and an internal resistance increase rate twice the initial value or lower, then the capacitor is considered to have excellent load characteristics at 60°C, excellent cycle characteristics and rate characteristics for use at room temperature, and thus have long-term reliability.

Measurement of expansion

In the case of the laminated cell, the thickness of the cell was measured, and then the thickness increase due to expansion was determined relative to that value. The initial thickness was 0.58±0.02 mm.

[Table 10]

| (Laminated capacitor) | | | | | |
|---|---|---|---|---|---|
| | | 0 hours (initial value) | 294 hours 294 | 356 hours | 500 hours |
| Electrolyte 3 | Capacitance (F) | 3.9 | 3.6 | 3.5 | 3.4 |
| | Capacitance retention (%) | 100 | 92 | 89 | 88 |
| | Internal resistance (mΩ) | 113 | 118 | 125 | 140 |
| | Internal resistance increase rate | 1.0 | 1.0 | 1.1 | 1.2 |
| | Cell thickness (mm) | 0.5800 | 0.5806 | 0.5854 | 0.5877 |
| | Expansion (mm) | 0 | 0.0006 | 0.0054 | 0.0077 |

Preparation Examples 9-1 to 9-4 (Preparation of PTFE organosol)

The PTFE organosol containing PTFE/THV at a mass ratio of 53/47 (produced in Preparation Example 3) was further diluted by the THV solution prepared in Preparation Example 2, such that the mass ratio of PTFE/THV would be 10/90, 20/80, 30/70, or 40/60 as shown in Table 11.

[Table 11]

| | PTFE | THV |
|---|---|---|
| Reparation Example 9-1 | 10 | 90 |
| Preparation Example 9-2 | 20 | 80 |
| Preparation Example 9-3 | 30 | 70 |
| Preparation Example 9-4 | 40 | 60 |

Preparation Example 10 (Conversion of THV aqueous dispersion into powder and into NMP solution)

A solution prepared by dissolving 0.8 g of aluminum nitrate nonahydrate in 100 g of water was stirred by a three-one motor at 100 rpm. During the stirring, 100 g of the THV aqueous dispersion obtained in Preparation Example 2 was gradually added, so that a wet polymer of THV was precipitated. The wet polymer of THV was recovered by vacuum filtration, and was rinsed with 100 g of water. The wet polymer was dried at 80°C, and thereby 15.1 g of THV powder was obtained.
An amount of 8 g of the THV powder was gradually added to 92 g of NMP while NMP was stirred by a three-one motor at 20 rpm. The mixture was stirred at room temperature for one night, whereby 100 g of an 8 wt% NMP solution of THV was obtained.

Example 7-1 (Lithium secondary cell)

(1) Preparation of positive electrode mixture slurry, and production of electrode

(Production of positive electrode)

One of the PTFE organosols prepared in Preparation Examples 9-1 to 9-4 was used as the binder composition for an electrode. $LiNi_{1/3}Co_{1/3}Mn_{1/3}O_2$ (produced by Nippon Chemical Industrial Co., Ltd.) as a positive electrode active material, acetylene black (produced by DENKI KAGAKU KOGYO K.K.), and the binder composition for an electrode were mixed at a solids mass ratio (positive electrode active material/acetylene black/binder composition) of 94/3/3. To the mixture was added NMP until the solids concentration was 65% by mass. The mixture was stirred by a double-arm kneader, and thereby a positive electrode mixture slurry was prepared.

Comparative Example 9

A positive electrode mixture slurry was prepared in accordance with the same formulation as that in Example 7-1, except that the binder composition for an electrode was changed from one of the PTFE organosols prepared in Preparation Examples 9-1 to 9-4 to the NMP solution containing only THV particles which was prepared in Preparation Example 10.

Example 7-2

The positive electrode mixture slurry obtained in Example 7-1 was applied to a 15-μm-thick aluminum foil and then dried, so that a coating layer having a thickness of about 80 μm was obtained. The coating layer was pressed (rolled) to give an overall thickness of 60 μm, and was then cut into a predetermined size (300 mm x 100 mm). Thereafter, the cut piece was heated by a vacuum dryer at 120°C for eight hours, whereby a sheet-shaped positive electrode (present invention) was produced.

Comparative Example 10

A sheet-shaped positive electrode (for comparison) was produced by the same procedure as that for Example 7-2, except that the positive electrode mixture slurry obtained in Comparative Example 9 was used instead of the positive electrode mixture slurry obtained in Example 7-1.

Example 7-3 and Comparative Example 11 (Battery characteristics)

(Production of laminated cell)

Each of the positive electrode obtained in Example 7-2 and the positive electrode obtained in Comparative Example 10 was cut into a size of 40 mm x 72 mm (with a 10 mm x 10 mm positive electrode terminal), the negative electrode 2 was cut into a size of 42 mm x 74 mm (with a 10 mm x 10 mm negative electrode terminal), and a lead was welded to each of the terminals. A 20-μm-thick microporous polyethylene film was cut into a size of 78 mm x 46 mm to prepare a separator. The separator was disposed between the positive electrode and the negative electrode. The resulting assembly was put in an aluminum laminated casing. Subsequently, 2 ml of an electrolyte was put into each casing, and the casing was sealed, whereby a laminated cell having a capacity of 72 mAh was produced. The electrolyte used was an ethylene carbonate/diethyl carbonate (= 30/70 (volume ratio)) solution (concentration: 1.0 mol/L) with an electrolyte salt of $LiPF_6$.

(Alternating current impedance method)

To measure the alternating current impedance of the above cell, a two-electrode cell was used for charging at 1.0 C up to 4.2 V until the charge current reached 1/10 C (SOC = 100%). Thereafter, the internal impedance of the cell was measured using a frequency analyzer (model 1260 produced by Solartron) and a potentio/galvanostat (model 1287 produced by Solartron). The measuring conditions were an amplitude of ±10 mV and a frequency of 1 kHz, and the thus obtained resistance was regarded as the internal resistance.

[Table 12]

| | Positive electrode | Binder composition for electrode | PTFE | THV | Internal resistance (Ω) |
|---|---|---|---|---|---|
| Example 7-3 | Example 7-2 | PTFE organosol prepared in Preparation Example 9-1 | 10 | 90 | 13.4 |
| | | PTFE organosol prepared in Preparation Example 9-2 | 20 | 80 | 12.9 |
| | | PTFE organosol prepared in Preparation Example 9-3 | 30 | 70 | 12.5 |
| | | PTFE organosol prepared in Preparation Example 9-4 | 40 | 60 | 12.2 |
| Comparative Example 11 | Comparative Example 10 | Preparation Example 10 | 0 | 100 | 13.8 |

The results show that addition of about 10% of PTFE leads to a lower resistance than in the case that the electrode is produced from a binder composition for an electrode which contains only THV. Further, the results show that a larger amount of PTFE tends to decrease the resistance itself.

Preparation Example 11 (Preparation of aqueous dispersion of PVdF)

A 3-L SUS stainless steel polymerization vessel with a stirrer was charged with a solution obtained by dissolving $F(CF_2)_5COONH_4$ and $CH2=CFCF_2OCF(CF_3)CF_2OCF(CF_3)COONH_4$ in pure water to concentrations of 3300 ppm and 200 ppm, respectively, and was then sealed. The atmosphere in the vessel was evacuated and replaced with nitrogen, and the vessel was then evacuated and added with 48 cc equivalent of ethane as a chain transfer agent through a syringe under vacuum. Then, a VdF monomer gas was added to the vessel under stirring at 80°C and 450 rpm until the pressure reached 1.4 MPaG. Then, an aqueous solution prepared by dissolving 205. 8 mg of APS in 10 g of water was added under nitrogen pressure so as to initiate the reaction. An amount of 10g of water was added again under nitrogen pressure such that no solution was left in the reaction pipe.

To the vessel was added an additional VdF monomer gas so that the internal pressure in the vessel was maintained. The stirring was slowed down when the amount of the additional monomer reached 241 g. Then, the gas in the vessel was blown away, and the reaction was terminated. The content of the vessel was cooled and 1595 g of an aqueous dispersion of PVdF particles was recovered in a container. The solids concentration of the aqueous dispersion determined by a dry weight method was 15.8% by mass. The copolymer composition determined by NMR analysis was VdF = 100.0 (mol%), and the melting point analyzed by DSC was 162.8C.

Preparation Example 12 (Preparation of PTFE organosol (PTFE/PVdF = 50/50 [mass ratio]))

A 200-mL beaker was charged with 40.0 g of the aqueous dispersion of PTFE particles (PTFE particles (A)) obtained in Preparation Example 1, 79.5 g of the aqueous dispersion of PVdF particles (polymer (B)) obtained in Preparation Example 11, and 16 g of hexane. The mixture was stirred with a mechanical stirrer. An amount of 60 g of acetone was added while the mixture was stirred, and then the stirring was performed for three minutes. After the stirring, the resulting coagulum and the supernatant mainly containing water were separated by filtration. The obtained hydrous coagulum was mixed with about 150 g of NMP, and the mixture was stirred for five minutes. The mixture was then put in a 500-ml recovery flask, and the water was evaporated by an evaporator, so that 110 g of an organosol was obtained in which PTFE particles were uniformly dispersed in NMP. The measured solids concentration of this organosol was

14.4% by mass, and the water concentration measured by the Karl-Fischer method was not higher than 100 ppm. The mass ratio of PTFE/PVdF measured by solid state NMR was 50/50. Also, the organosol was left to stand still and observed by eye. The organosol showed no separated layers or particles even after 10 or more days.

Example 8 (Production of positive electrode 5)

A positive electrode 5 was produced by the same procedure as that for production of the positive electrode 1 (Example 2-1), except that the PTFE organosol (PTFE/PVdF = 50/50) prepared in Preparation Example 12 was used instead of the PTFE organosol prepared in Preparation Example 3 as the binder composition for an electrode. Further, a lithium secondary cell was produced by the same procedure as that for Test 3 to determine the cycle characteristic (capacity retention) thereof. Table 13 shows the results.
[Table 13]

| Combination of electrodes | | Cycle characteristic (%) |
|---|---|---|
| Positive electrode No. | Negative electrode No. | |
| 5 | 1 | 92.6 |

Preparation Example 13 (Preparation of aqueous dispersion of TFE-VdF copolymer)

A 3-L SUS stainless steel polymerization vessel with a stirrer was charged with a solution obtained by dissolving $F(CF_2)_5COONH_4$ and $CH_2=CFCF_2OCF(CF_3)CF_2OCF(CF_3)COONH_4$ in pure water to concentrations of 3300 ppm and 200 ppm, respectively, and was then sealed. The atmosphere in the vessel was evacuated and replaced with nitrogen, and the vessel was then evacuated and added with 400 cc equivalent of ethane as a chain transfer agent through a syringe under vacuum. Then, a monomer gas mixture having a VdF/TFE composition ratio of 67/33 mol% was added to the vessel under stirring at 70°C and 450 rpm until the pressure reached 0.39 MPaG. Then, an aqueous solution prepared by dissolving 137.2 mg of APS in 10 g of water was added under nitrogen pressure so as to initiate the reaction. An amount of 10 g of water was added again under nitrogen pressure such that no solution was left in the reaction pipe.
To the vessel was added an additional monomer mixture having a VdF/TFE composition ratio of 67/33 mol% so that the internal pressure in the vessel was maintained. The stirring was slowed down when the amount of the additional monomer reached 346 g. Then, the gas in the vessel was blown away, and the reaction was terminated. The content of the vessel was cooled and 1708 g of an aqueous dispersion of VdF/TFE copolymer (hereinafter, referred to as "TV-1") particles was recovered in a container. The solids concentration of the aqueous dispersion determined by a dry mass method was 20.4% by mass. The copolymer composition determined by NMR analysis was VdF/TFE = 67.0/33.0 (mol%), and the melting point analyzed by DSC was 145.9°C.

Preparation Example 14 (Preparation of PTFE organosol (PTFE/TV-1 = 50/50 [mass ratio]))

A 500-mL beaker was charged with 40.0 g of the aqueous dispersion of PTFE particles (PTFE particles (A)) obtained in Preparation Example 1, 60.7 g of the aqueous dispersion of TV-1 particles (polymer (B)) obtained in Preparation Example 13, and 16 g of hexane. The mixture was stirred with a mechanical stirrer. An amount of 95 g of acetone was added while the mixture was stirred, and then the stirring was performed for three minutes. After the stirring, the resulting coagulum and the supernatant mainly containing water were separated by filtration. The obtained hydrous coagulum was mixed with about 250 g of NMP, and the mixture was stirred for five minutes. The mixture was then put in a 500-ml recovery flask, and the water was evaporated by an evaporator, so that 164 g of an organosol was obtained in which PTFE particles were uniformly dispersed in NMP. The measured solids concentration of this organosol was 14.4% by mass, and the water concentration measured by the Karl-Fischer method was not higher than 100 ppm. The mass ratio of PTFE/TV-1 measured by solid state NMR was 50/50. Also, the organosol was left to stand still and observed by eye. The organosol showed no separated layers or particles even after 10 or more days.

Example 9 (Production of positive electrode 6)

A positive electrode 6 was produced by the same procedure as that for production of the positive electrode 1 (Example 2-1) except that the PTFE organosol (PTFE/TV-1 = 50/50 [mass ratio]) prepared in Preparation Example 14 was used instead of the PTFE organosol prepared in Preparation Example 3 as the binder composition for an electrode. Further, a lithium secondary cell was produced by the same procedure as that for Test 3 to determine the cycle characteristic (capacity retention) thereof. Table 14 shows the results.

[Table 14]

| Combination of electrodes | | Cycle characteristic (%) |
|---|---|---|
| Positive electrode No. | Negative electrode No. | |
| 6 | 1 | 92.9 |

## Claims

1. A binder composition for an electrode, comprising
an organosol composition containing polytetrafluoroethylene particles (A), a polymer (B), and a fluorine-free organic solvent (C); and
no electrode active material (J),
wherein the polymer (B) is soluble in the fluorine-free organic solvent (C).

2. The binder composition according to claim 1,
wherein the amount of the polytetrafluoroethylene particles (A) is not lower than 50% by mass of the total amount of the polytetrafluoroethylene particles (A) and the polymer (B).

3. The binder composition according to claim 1 or 2, further comprising
a binder polymer (I) for a current collector, the polymer (I) having a high binding ability to the current collector.

4. The binder composition according to claim 1, 2, or 3,
wherein the polytetrafluoroethylene particles (A) have a standard specific gravity of 2.130 to 2.230.

5. The binder composition according to claim 1, 2, 3, or 4,
wherein the polytetrafluoroethylene particles (A) are unmodified high-molecular-weight polytetrafluoroethylene particles.

6. The binder composition according to claim 1, 2, 3, 4, or 5,
wherein the fluorine-free organic solvent (C) is N-methyl-2-pyrrolidone.

7. The binder composition according to claim 1, 2, 3, 4, 5, or 6,
wherein the amount of the polytetrafluoroethylene particles (A) is not higher than 95% by mass of the total amount of the polytetrafluoroethylene particles (A) and the polymer (B) in the organosol composition.

8. The binder composition according to claim 3, 4, 5, 6, or 7,
wherein the binder polymer (I) is a fluororesin and/or a fluororubber.

9. The binder composition according to claim 8, wherein the binder polymer (I) is a resin and/or a rubber which have/has vinylidene fluoride units.

10. The binder composition according to claim 3, 4, 5, 6, or 7,
wherein the binder polymer (I) is a fluorine-free resin and/or a fluorine-free rubber.

11. The binder composition according to claim 10, wherein the binder polymer (I) is polyamideimide and/or polyimide.

12. An electrode mixture slurry, comprising
the binder composition according to claim 1, 2, 3, 4, 5, 6, 7, 8, 9, 10, or 11, and
an electrode active material (J).

13. An electrode obtainable by applying the electrode mixture slurry according to claim 12 to a current collector.

14. A lithium secondary cell comprising

the electrode(s) according to claim 13 as a positive electrode and/or a negative electrode, and a nonaqueous electrolyte.

**15.** An electric double layer capacitor comprising the electrode(s) according to claim 13 as a positive electrode and/or a negative electrode, and a nonaqueous electrolyte.

**INTERNATIONAL SEARCH REPORT**

International application No. PCT/JP2011/060656

A. CLASSIFICATION OF SUBJECT MATTER

*H01M4/62*(2006.01)i, *H01G9/058*(2006.01)i, *H01M4/13*(2010.01)i, *H01M10/052*(2010.01)i, *H01M10/0566*(2010.01)i

According to International Patent Classification (IPC) or to both national classification and IPC

B. FIELDS SEARCHED

Minimum documentation searched (classification system followed by classification symbols)

H01M4/62, H01G9/058, H01M4/13, H01M10/052, H01M10/0566

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br><br>Y | JP 10-233216 A (Hitachi Maxell, Ltd.), 02 September 1998 (02.09.1998), claim 1; paragraphs [0009] to [0022] (Family: none) | 1-3,5-10, 12-15<br>4,11 |
| Y | JP 2004-31179 A (Du Pont-Mitsui Fluorochemicals Co., Ltd.), 29 January 2004 (29.01.2004), claim 1; paragraph [0013] & US 2005/0107553 A1 & GB 2408959 A & GB 327529 D0 & DE 10355675 A | 4 |
| Y | JP 2006-253450 A (Nisshinbo Industries, Inc.), 21 September 2006 (21.09.2006), claims 1, 9; paragraphs [0002] to [0007] (Family: none) | 11 |

☒ Further documents are listed in the continuation of Box C.

☐ See patent family annex.

* Special categories of cited documents:

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| | |
|---|---|
| Date of the actual completion of the international search<br>27 July, 2011 (27.07.11) | Date of mailing of the international search report<br>09 August, 2011 (09.08.11) |
| Name and mailing address of the ISA/<br>Japanese Patent Office<br><br>Facsimile No. | Authorized officer<br><br>Telephone No. |

Form PCT/ISA/210 (second sheet) (July 2009)

**INTERNATIONAL SEARCH REPORT**

International application No.
PCT/JP2011/060656

C (Continuation). DOCUMENTS CONSIDERED TO BE RELEVANT

| Category* | Citation of document, with indication, where appropriate, of the relevant passages | Relevant to claim No. |
|---|---|---|
| A | JP 8-339809 A (Daikin Industries, Ltd.), 24 December 1996 (24.12.1996), & US 6156453 A & EP 821423 A1 & WO 1996/032751 A1 & DE 69606397 D & DE 69606397 T & CN 1181157 A | 1-15 |
| A | JP 11-97025 A (Hitachi Maxell, Ltd.), 09 April 1999 (09.04.1999), (Family: none) | 1-15 |
| A | JP 11-354105 A (Nitto Denko Corp.), 24 December 1999 (24.12.1999), (Family: none) | 1-15 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000149954 A
- JP 2001216957 A
- JP 2001266854 A
- JP H10134819 A
- JP H11003711 A
- JP H11003709 A
- JP H10074505 A
- JP H10302780 A
- JP H11329904 A
- JP 62109846 A
- JP H2158651 A
- JP H4154842 A
- WO 9612764 A1
- JP 63284201 A
- JP 48027549 B
- JP H1053682 A
- JP 2008527081 T
- JP 2007299612 A
- JP 2007324073 A
- JP H0621992 A
- JP 2000327634 A
- JP 2001256983 A
- JP H08037024 A
- JP H09097627 A
- JP H11026015 A
- JP 2000294281 A
- JP 2001052737 A
- JP H11307123 A
- JP 2003132944 A
- JP H8222270 A
- JP 2002100405 A
- JP H4506726 T
- JP H8507407 T
- JP H10294131 A
- JP H1135765 A
- JP H1186630 A
- JP 2004301934 A